# EUROPEAN PATENT SPECIFICATION

(11) **EP 3 618 347 B1**
(45) Date of publication and mention of the grant of the patent: **21.07.2021**
(21) Application number: 17909301.8
(22) Date of filing: 10.05.2017
(51) Int. Cl.: H04L 29/06, H04L 9/32, H04W 12/06, H04M 1/725, G06F 3/0486, G06F 3/0481, G06F 9/54, H04W 4/12

(54) **METHOD AND DEVICE FOR INPUTTING VERIFICATION CODE**
VERFAHREN UND VORRICHTUNG ZUR EINGABE EINES ÜBERPRÜFUNGSCODES
PROCÉDÉ ET DISPOSITIF D'ENTRÉE DE CODE DE VÉRIFICATION

(43) Date of publication of application: 04.03.2020
(73) Proprietor: Huawei Technologies Co., Ltd., Longgang District Shenzhen, Guangdong 518129 (CN)
(72) Inventor: ZHAO, Xiaona, Shenzhen Guangdong 518129 (CN); CHEN, Xiaoxiao, Shenzhen Guangdong 518129 (CN); MEI, Jingqing, Shenzhen Guangdong 518129 (CN); CHANG, Xinmiao, Shenzhen Guangdong 518129 (CN)
(74) Representative: Gill Jennings & Every LLP
(86) International application number: PCT/CN2017/083788
(87) International publication number: WO 2018/205168

(56) References cited:
- EP-A2- 2 166 437
- CN-A- 103 546 877
- CN-A- 105 049 607
- CN-A- 105 159 533
- CN-A- 105 553 663
- CN-A- 106 529 265
- US-A1- 2015 012 862
- US-A1- 2017 024 226

## Description

### TECHNICAL FIELD

Embodiments of the present invention relate to the field of communications technologies, and in particular, to a verification code input method and apparatus.

### BACKGROUND

SMS message verification is a process in which an enterprise provides a credential (for example, a verification code) for a user, to verify a user identity by using a verification code in SMS message content. After receiving a verification SMS message that includes a verification code, the user may manually enter the verification code into a specified location of a verification interface of a to-be-verified application. For example, the user may switch to an SMS message application to memorize or copy the verification code in the verification SMS message, and then switch back to the to-be-verified application to manually enter as memorized or paste the copied verification code into the specified location of the verification interface. Alternatively, the user may grant permission to the to-be-verified application to read an SMS message. In this way, after the user receives the verification SMS message, a terminal may automatically read the verification code in the verification SMS message, and input the verification code into the specified location of the verification interface.

However, in the foregoing two verification code input methods, granting the permission to the to-be-verified application to read an SMS message increases a risk of user privacy disclosure, and when manually entering the verification code, the user needs to frequently perform an operation such as interface switching. Consequently, a risk of incorrectly entering the verification code is increased, SMS message verification duration is increased, and efficiency of performing an SMS message verification operation by the user is reduced.
CN103546877B discloses a system and mobile terminal and a corresponding method involving simultaneously obtaining input a content code.

US 2015/012862 A1 discloses a drag-and-drop operation to copy text from a first display area into an input box of a second display area.

### SUMMARY

Embodiments of the present invention provide a verification code input method and an apparatus, so that a to-be-verified application can automatically obtain a verification code in a verification SMS message without a need to grant permission to an application to read an SMS message, thereby ensuring accuracy and security of verification code input.

To achieve the foregoing objective, the following technical solutions are used in the embodiments of the present invention:

According to a first aspect, an embodiment of the present invention provides a verification code input method, including: after obtaining a verification SMS message that includes a verification code, an electronic device may automatically extract the verification code in the verification SMS message; further, when the electronic device detects a single operation (the single operation is used to instruct the electronic device to input the verification code into a preset location of a to-be-verified application) performed on a touchscreen, the electronic device inputs the verification code into the preset location. In this way, in an SMS message verification process, the electronic device may automatically obtain the verification code in the verification SMS message, and a user may enter the verification code into the preset location of the to-be-verified application by performing the single operation, so as to prevent the user from frequently performing an operation such as switching between the to-be-verified application and an SMS message application. Therefore, the SMS message verification process is simpler and more accurate. In addition, the user does not need to grant permission to the to-be-verified application to read SMS message content, so as to ensure user privacy security.

In a possible method design, after the electronic device obtains the verification SMS message, the method further includes: when the to-be-verified application runs in the foreground, the electronic device displays the verification SMS message and the to-be-verified application at the same time on a display interface by using different windows; and that the electronic device inputs the verification code into the preset location in response to the single operation includes: the electronic device obtains an end location of the single operation on the display interface, and when the end location is on a window on which the to-be-verified application is located, the electronic device inputs the verification code into the preset location. In other words, in the SMS message verification process, the electronic device may present the to-be-verified application and the SMS message application of the verification SMS message to the user at the same time. In this way, the user may directly enter the verification code into the preset location by performing the single operation.

In the foregoing possible method design, the to-be-verified application may constantly run in the foreground, or the to-be-verified application may be switched to running in the foreground after the single operation is detected. For example, after being acknowledged by the user, a disabled to-be-verified application is invoked and switched to running in the foreground. This is not limited in this embodiment of the present invention.

In a possible method design, after the electronic device obtains the end location of the single operation on the display interface, the method further includes: when the end location is not on the window on which the to-be-verified application is located, the electronic device presents a first prompt on the display interface, where the first prompt is used to instruct a user to perform a correct single operation on the verification code; or when the end location is not on the window on which the to-be-verified application is located, the electronic device may exchange the window on which the to-be-verified application is located and a window on which the end location is located. In this way, the to-be-verified application runs on the window that is obtained after the exchanging and on which the end location of the single operation is located, to trigger the electronic device to input the verification code into the preset location.

In a possible method design, after the electronic device obtains the verification SMS message, the method further includes: the electronic device adds a first target window to the display interface, where the first target window is used to display the verification SMS message; and that the electronic device inputs the verification code into the preset location in response to the single operation includes: in response to the single operation, the electronic device determines whether the to-be-verified application runs in the foreground, and when the to-be-verified application runs in the foreground, the electronic device inputs the verification code into the preset location; or when the to-be-verified application does not run in the foreground, the electronic device invokes the to-be-verified application to run in the foreground, and inputs the verification code into the preset location.

In a possible method design, that the electronic device determines whether the to-be-verified application runs in the foreground includes: the electronic device determines whether the to-be-verified application runs on a second target window (the second target window is a window on which an end location of the single operation is located); and if the to-be-verified application runs on the second target window, the electronic device determines that the to-be-verified application runs in the foreground; or if the to-be-verified application does not run on the second target window, the electronic device determines that the to-be-verified application does not run in the foreground.

In a possible method design, after the electronic device receives the verification SMS message, the method further includes: the electronic device stores the verification code in the verification SMS message into target storage space, where the target storage space is different from storage space in which a clipboard of the electronic device is located.

To be specific, the electronic device pre-establishes a correspondence between the single operation and an operation of inputting the verification code in the target storage space into a verification input box, and once detecting that the user triggers the single operation, the electronic device may input the verification code stored in the target storage space into the verification input box. In this way, the user does not need to grant permission to the to-be-verified application to read SMS message content, and may enter the verification code into the verification input box only by performing the single operation, so as to prevent the user from frequently performing an operation such as switching between the to-be-verified application and the SMS message application, thereby improving efficiency of successfully performing an SMS message verification operation.

In a possible method design, the single operation is uniquely associated with a verification code input operation; and that the electronic device inputs the verification code into the preset location in response to the single operation includes: in response to the single operation, the electronic device inputs the verification code stored in the target storage space into the preset location.

In a possible method design, the single operation is associated with both a verification code input operation and an operation of inputting content that is most recently copied by the user; and that the electronic device inputs the verification code into the preset location in response to the single operation includes: in response to the single operation, the electronic device determines whether the to-be-verified application runs in the foreground; and when the to-be-verified application runs in the foreground, the electronic device inputs the verification code stored in the target storage space into the preset location.

In a possible method design, after the electronic device determines whether the to-be-verified application runs in the foreground, the method further includes: when the to-be-verified application does not run in the foreground, the electronic device pastes content that is most recently copied by the user in the clipboard.

In a possible method design, before the electronic device detects the single operation performed on the touchscreen, the method further includes: the electronic device prompts, on the display interface, the user to perform the single operation.

According to a second aspect, an embodiment of the present invention provides an electronic device, including: an obtaining unit, configured to receive a verification SMS message, where the verification SMS message includes a verification code; a detection unit, configured to detect a single operation performed on a touchscreen, where the single operation is used to instruct the electronic device to input the verification code into a preset location of a to-be-verified application, and the to-be-verified application performs authentication on a user identity by using the verification code; and an execution unit, configured to input the verification code into the preset location in response to the single operation.

According to a third aspect, an embodiment of the present invention provides an electronic device, including a processor, a memory, a bus, and a communications interface. The memory is configured to store a computer execution instruction, the processor is connected to the memory by using the bus, and when the electronic device runs, the processor executes the computer execution instruction stored in the memory, so that the electronic device performs the foregoing verification code input method.

According to a fourth aspect, an embodiment of the present invention provides a computer readable storage medium. The computer readable storage medium stores an instruction, and when the instruction is run on the foregoing electronic device, the electronic device performs the foregoing verification code input method.

According to a fifth aspect, an embodiment of the present invention provides a computer program product including an instruction. When the computer program product is run on the foregoing electronic device, the electronic device performs the foregoing verification code input method.

In the embodiments of the present invention, a name of the electronic device does not constitute a limitation on the device itself, and in actual implementation, the device may have other names. The device belongs to the scope of the claims of the present invention.

In addition, for technical effects of designs of the second aspect to the fifth aspect, refer to technical effects of different method designs of the first aspect. Details are not described herein again.

The present invention is defined in the independent claims. Preferred embodiments are defined in the dependent claims.

### BRIEF DESCRIPTION OF DRAWINGS

FIG. 1 is a first schematic diagram of a scenario of a verification code input method according to an embodiment of the present invention;
FIG. 2 is a second schematic diagram of a scenario of a verification code input method according to an embodiment of the present invention;
FIG. 3 is a third schematic diagram of a scenario of a verification code input method according to an embodiment of the present invention;
FIG. 4 is a first schematic structural diagram of an electronic device according to an embodiment of the present invention;
FIG. 5 is a first schematic flowchart of a verification code input method according to an embodiment of the present invention;
FIG. 6 is a fourth schematic diagram of a scenario of a verification code input method according to an embodiment of the present invention;
FIG. 7 is a fifth schematic diagram of a scenario of a verification code input method according to an embodiment of the present invention;
FIG. 8 is a sixth schematic diagram of a scenario of a verification code input method according to an embodiment of the present invention;
FIG. 9 is a seventh schematic diagram of a scenario of a verification code input method according to an embodiment of the present invention;
FIG. 10 is an eighth schematic diagram of a scenario of a verification code input method according to an embodiment of the present invention;
FIG. 11 is a ninth schematic diagram of a scenario of a verification code input method according to an embodiment of the present invention;
FIG. 12 (a) and FIG. 12 (b) are a tenth schematic diagram of a scenario of a verification code input method according to an embodiment of the present invention;
FIG. 13 (a) and FIG. 13 (b) are an eleventh schematic diagram of a scenario of a verification code input method according to an embodiment of the present invention;
FIG. 14 (a) and FIG. 14 (b) are a twelfth schematic diagram of a scenario of a verification code input method according to an embodiment of the present invention;
FIG. 15 is a thirteenth schematic diagram of a scenario of a verification code input method according to an embodiment of the present invention;
FIG. 16 (a), FIG. 16 (b), and FIG. 16 (c) are a fourteenth schematic diagram of a scenario of a verification code input method according to an embodiment of the present invention;
FIG. 17 is a second schematic flowchart of a verification code input method according to an embodiment of the present invention;
FIG. 18 (a) and FIG. 18 (b) are a fifteenth schematic diagram of a scenario of a verification code input method according to an embodiment of the present invention;
FIG. 19 is a sixteenth schematic diagram of a scenario of a verification code input method according to an embodiment of the present invention;
FIG. 20 is a seventeenth schematic diagram of a scenario of a verification code input method according to an embodiment of the present invention;
FIG. 21 is an eighteenth schematic diagram of a scenario of a verification code input method according to an embodiment of the present invention;
FIG. 22 (a) and FIG. 22 (b) are a nineteenth schematic diagram of a scenario of a verification code input method according to an embodiment of the present invention;
FIG. 23 is a third schematic flowchart of a verification code input method according to an embodiment of the present invention;
FIG. 24 is a twentieth schematic diagram of a scenario of a verification code input method according to an embodiment of the present invention;
FIG. 25 is a twenty-first schematic diagram of a scenario of a verification code input method according to an embodiment of the present invention;
FIG. 26 is a second schematic structural diagram of an electronic device according to an embodiment of the present invention; and
FIG. 27 is a third schematic structural diagram of an electronic device according to an embodiment of the present invention.

### DESCRIPTION OF EMBODIMENTS

The terms "first" and "second" in the following are merely used for description, and shall not be understood as an indication or implication of relative importance or implicit indication of a quantity of indicated technical features. Therefore, a feature restricted by "first " or "second" may explicitly indicate or implicitly include one or more such features. In the descriptions in the embodiments of the present invention, "a plurality of' means two or more unless otherwise specified.

An embodiment of the present invention provides a verification code input method. The method may be applied to any electronic device having an SMS message verification function, for example, a mobile phone, a wearable device, an augmented reality (augmented reality, AR)/virtual reality (virtual reality, VR) device, a tablet computer, a notebook computer, an ultra-mobile personal computer (ultra-mobile personal computer, UMPC), a netbook, or a personal digital assistant (personal digital assistant, PDA). This is not limited in this embodiment of the present invention.

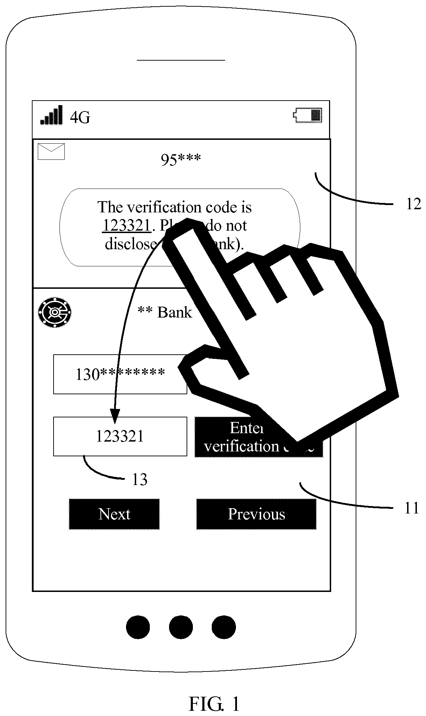

Specifically, in the verification code input method provided in this embodiment of the present invention, when an electronic device receives a verification SMS message that includes a verification code, as shown in FIG. 1, the electronic device may present, to a user at the same time in a multi-window display manner, a to-be-verified application 11 corresponding to the verification SMS message and an SMS message application 12 displaying the verification SMS message. In this way, when the electronic device detects that the user performs a preset single operation such as a drag operation on the verification code in the SMS message application 12, the electronic device may input the verification code into a preset location of the to-be-verified application 11, for example, a verification input box 13 of the to-be-verified application 11 in FIG. 1.

In this way, in an SMS message verification process, the electronic device may present the to-be-verified application 11 and the SMS message application 12 of the verification SMS message to the user at the same time. Further, the user may directly enter the verification code into the verification input box 13 by performing the single operation, so as to prevent the user from frequently performing a plurality of operations such as switching between the to-be-verified application 11 and the SMS message application 12. Therefore, the SMS message verification process is simpler and more accurate. In addition, the user does not need to grant permission to the to-be-verified application 11 to read SMS message content, so as to ensure user privacy security.

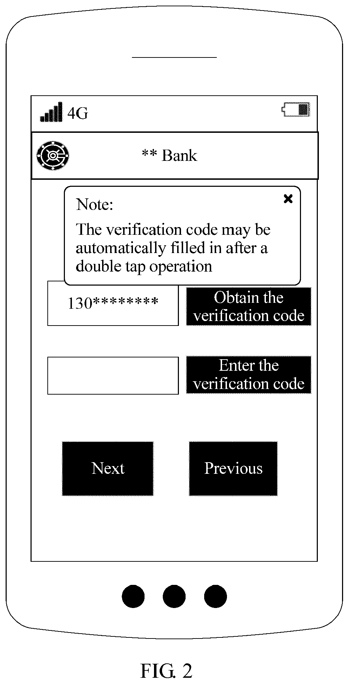

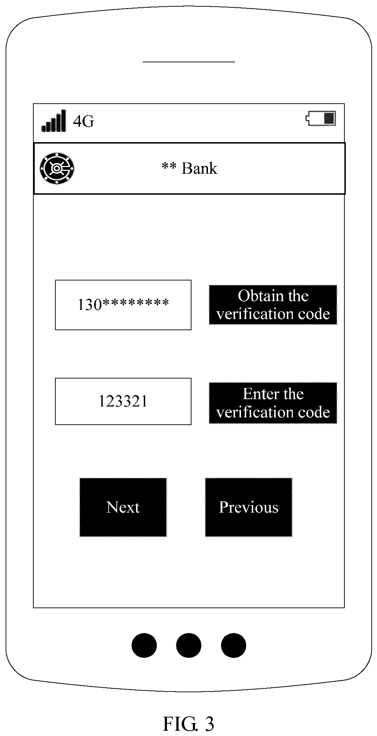

Alternatively, in another possible implementation, when the electronic device receives the verification SMS message that includes the verification code, the electronic device may automatically store the verification code. Further, as shown in FIG. 2, the electronic device prompts, by using a display interface, the user to perform a single operation such as a double tap operation used to paste the verification code into the verification input box. In this way, when detecting that the user performs the single operation, as shown in FIG. 3, the electronic device may directly paste the stored verification code into the verification input box of the to-be-verified application.

To be specific, the electronic device pre-establishes a correspondence between the single operation and an operation of inputting the verification code into the verification input box, and once detecting that the user triggers the single operation, the electronic device may input the stored verification code into the verification input box. In this way, the user does not need to grant permission to the to-be-verified application to read SMS message content, and may enter the verification code into the verification input box only by performing the single operation, so as to prevent the user from frequently performing a plurality of operations such as switching between the to-be-verified application and the SMS message application, thereby improving efficiency of successfully performing an SMS message verification operation.

In addition, by dividing storage space of the electronic device, the electronic device may obtain target storage space dedicatedly used to store a verification code. In this way, because the verification code is stored in the target storage space rather than default storage space such as a default clipboard of the electronic device, content stored when the user performs a copy operation most recently is still stored in the default clipboard, so that the user can subsequently paste the stored content from the default clipboard. Certainly, the verification code may alternatively be stored into the default clipboard. This is not limited in the embodiments of the present invention.

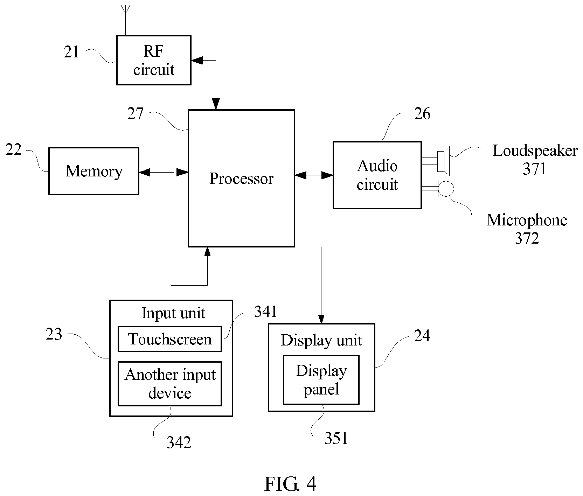

For a hardware structure of the electronic device in this embodiment of the present invention, refer to constitution components of an electronic device shown in FIG. 4.

As shown in FIG. 4, the electronic device may specifically include components such as a radio frequency (radio frequency, RF radio frequency) circuit 21, a memory 22, an execution unit 23, a display unit 24, an audio circuit 26, and a processor 27. A person skilled in the art may understand that the structure of the electronic device shown in FIG. 4 does not constitute a limitation on the electronic device, may include more or fewer components than those shown in the figure, combine some components, or have different component arrangements.

The following specifically describes the constitution components of the electronic device with reference to FIG. 4.

The RF circuit 21 may be configured to receive and send a signal in an information receiving and sending process or a call process. Particularly, after receiving downlink information from a wireless access device, the RF circuit 21 sends the downlink information to the processor 27 for processing, and sends uplink data to the wireless access device. Generally, the RF circuit includes but is not limited to an antenna, at least one amplifier, a transceiver, a coupler, a low noise amplifier (low noise amplifier, LNA), a duplexer, and the like. In addition, the RF circuit 21 may further communicate with a network and another device through wireless communication.

The memory 22 may be configured to store a software program and a module, and by running the software program and the module that are stored in the memory 22, the processor 27 performs various function applications and data processing of the electronic device.

The execution unit 23 may be configured to: receive input digit or character information, and generate key signal input related to user setting and function control of the electronic device. Specifically, the execution unit 23 may include a touchscreen 341 and another input device 342.

The display unit 24 may be configured to display information entered by the user or information provided for the user, and various menus of the electronic device. The display unit 24 may include a display panel 351. Optionally, the display panel 351 may be configured by using a liquid crystal display (liquid crystal display, LCD), an organic light-emitting diode (organic light-emitting diode, OLED), or the like.

The electronic device may further include a gravity sensor (gravity sensor) and another sensor such as an optical sensor, a gyroscope, a barometer, a hygrometer, a thermometer, or an infrared sensor. Details are not described herein.

The audio circuit 26, a loudspeaker 371, and a microphone 372 may provide an audio interface between the user and the electronic device. The audio circuit 26 may transmit, to the loudspeaker 371, an electrical signal converted from received audio data, and the loudspeaker 371 converts the electrical signal into a sound signal for output. In addition, the microphone 372 converts a collected sound signal into an electrical signal, and after receiving the electrical signal, the audio circuit 26 converts the electrical signal into audio data, and then outputs the audio data to the RF circuit 21 to send the audio data to, for example, another electronic device, or outputs the audio data to the memory 22 for further processing.

The processor 27 is a control center of the electronic device, connects all components of the electronic device by using various interfaces and lines, and performs various functions of the electronic device and processes data by running or executing the software program and/or the module stored in the memory 22 and by invoking data stored in the memory 22, to perform overall monitoring on the electronic device. Optionally, the processor 27 may include one or more processing units.

Although not shown, the electronic device may further include a power supply, a camera, a Wireless Fidelity (Wireless Fidelity, Wi-Fi) module, a Bluetooth module, and the like. Details are not described herein.

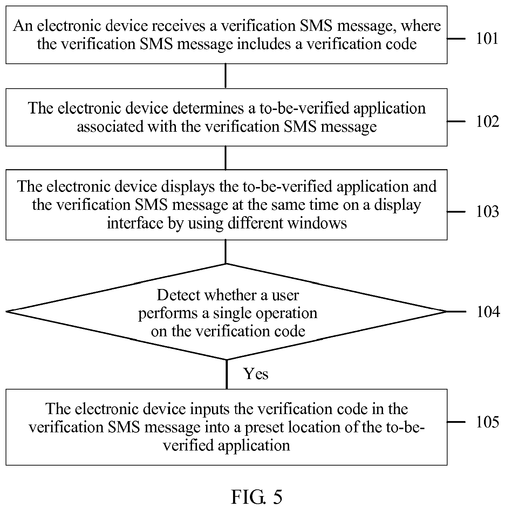

The following describes in detail a verification code input method according to an embodiment of the present invention with reference to specific embodiments. As shown in FIG. 5, the method includes the following steps.

101. An electronic device receives a verification SMS message, where the verification SMS message includes a verification code.

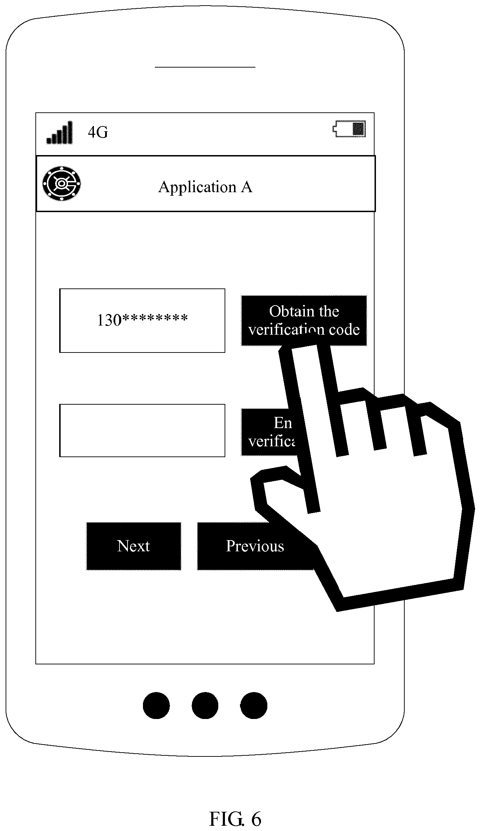

Specifically, when performing an operation such as online payment or account registration by using any application (for example, an application A), as shown in FIG. 6, a user may trigger the application A to display a to-be-verified interface for SMS message verification. After the user fills in a telephone number of the electronic device and triggers a function of sending a verification code, a server of the application A sends a verification SMS message that includes the verification code to the electronic device according to the telephone number.

The verification code may also be referred to as an authentication code, a dynamic code, or the like, and is usually verification information such as a string of random digits or characters. This is not limited in this embodiment of the present invention.

In addition, the verification code may be generated by the server of the application A, or may be generated by the server of the application A by using a server dedicatedly used to provide an SMS message verification service, or may be generated by an operator server of an operator, or the like. A process of generating and sending the verification code in the verification SMS message may be implemented based on the prior art, and this is not limited in this embodiment of the present invention.

102. The electronic device determines a to-be-verified application associated with the verification SMS message.

It should be noted that the to-be-verified application may be one of applications installed on the electronic device, or may be one of applications currently running in the foreground or the background. The to-be-verified application may perform, by using the verification code, identity authentication on a user that triggers a verification operation.

Specifically, the electronic device may pre-establish a correspondence between different applications in the electronic device and different key information. The key information may be a telephone number for sending an SMS message, or may be a name, an abbreviation, a package name (package name), or the like of an application. In this way, the electronic device may extract corresponding key information from the verification SMS message, and further determine that an application corresponding to the key information is the to-be-verified application.

For example, there is a correspondence between the application A and a telephone number "95555". Therefore, once learning that a telephone number for sending the verification SMS message is "95555", the electronic device may determine that a to-be-verified application associated with the verification SMS message is the application A.

Alternatively, there is a correspondence between the application A and a character string "Bank of Communications". Therefore, once extracting the character string "Bank of Communications" from the verification SMS message, the electronic device may determine that a to-be-verified application associated with the verification SMS message is the application A.

Further, the electronic device may run a plurality of applications at the same time. Therefore, when the to-be-verified application is the application A, the electronic device may further determine whether the application A is running currently, in other words, whether the application A is running in the foreground. If the application A is running, the electronic device may continue to perform the following steps 103 to 105. This is because if the application A is currently running on the electronic device, the electronic device may directly display a related interface of the application A subsequently, and does not need to restart the application A or invoke the application A to run in the foreground, so as to reduce duration of an SMS message verification process.

103. The electronic device displays an interface of the to-be-verified application and an interface of the verification SMS message on a display interface at the same time.

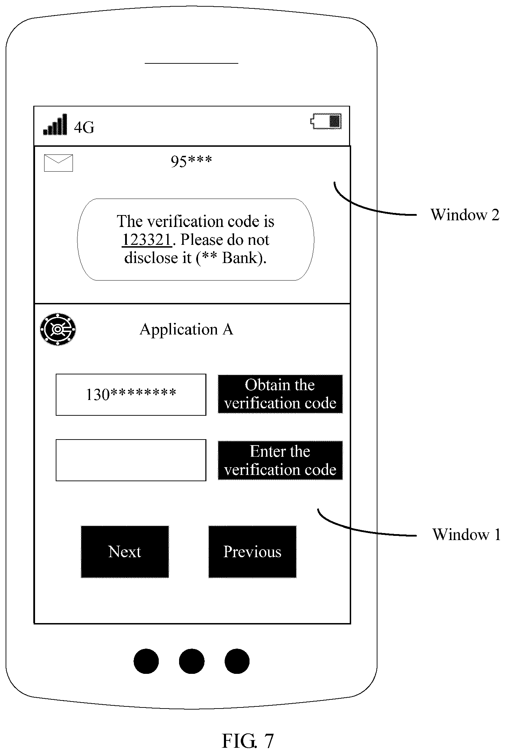

Specifically, in step 103, when the electronic device determines that the to-be-verified application is the application A, the electronic device may be triggered to start a multi-window display mode such as a split-screen display mode or a message box popup mode. By using the split-screen display mode as an example, as shown in FIG. 7, the electronic device may present each of a to-be-verified interface of the determined to-be-verified application, namely, the application A, and an SMS message interface of the verification SMS message to the user by using one window.

The split-screen display mode may also be referred to as a multi-screen mode, and belongs to a multi-window display mode. When the electronic device enters the split-screen mode, a plurality of windows are obtained on a same display interface (for example, a touchscreen of a mobile phone) through division, so that a plurality of applications are separately run and displayed on the plurality of windows at the same time. The message box popup mode also belongs to the multi-window display mode, and means that another window is overlaid on the display interface. The overlaid window may be always on the front end of the display interface, for example, is displayed in a form of a floating window, so that the plurality of windows are allowed to partially overlap.

In a possible implementation, after the electronic device determines that the to-be-verified application is the application A, the user may still remain on the to-be-verified interface of the application A, in other words, the application A runs in the foreground as a foreground application in this case. Therefore, still as shown in FIG. 7, the electronic device may create two windows such as a window 1 and a window 2 on the display interface, to display the to-be-verified interface of the application A on the window 1, and display the SMS message interface of the verification SMS message on the window 2.

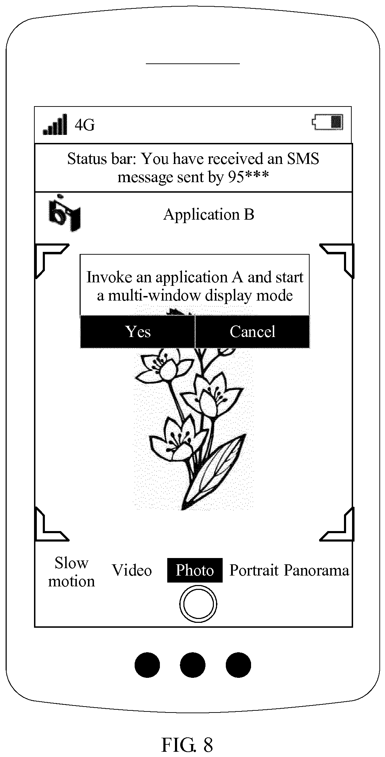

In another possible implementation, as shown in FIG. 8, after the electronic device determines that the to-be-verified application is the application A, the user possibly has switched from the to-be-verified interface of the application A to an operation interface of an application B, in other words, a foreground application in this case is the application B rather than the to-be-verified application A. Still as shown in FIG. 8, the electronic device may prompt the user to invoke the application A and start the multi-window display mode. If the user determines to invoke the application A and start the multi-window display mode, as shown in FIG. 7, the electronic device may invoke the application A, display the to-be-verified interface of the application A on the window 1, and display the SMS message interface of the verification SMS message on the window 2.

A manner of prompting the user to invoke the application A and start the multi-window display mode may be specifically implemented in a manner of an image, a text, voice, and the like. Certainly, the electronic device may not prompt the user, but automatically invokes the application A to run in the foreground and starts the multi-window display mode. This is not limited in this embodiment of the present invention.

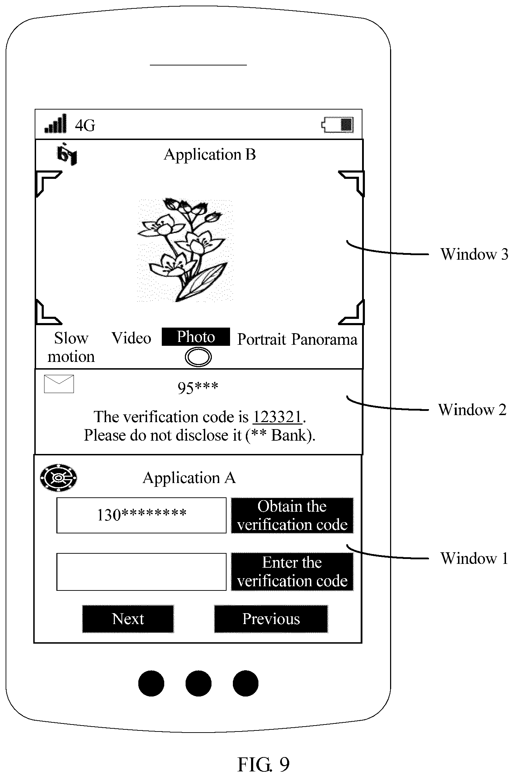

Further, the display interface of the electronic device is the operation interface of the application B, in other words, the application A does not run in the foreground. Therefore, when the user determines to invoke the application A and start the multi-window display mode, as shown in FIG. 9, the electronic device may create a window, namely, the window 1 of the application A on the display interface, and display the operation interface of the application B on a window 3. In this case, the electronic device displays three windows at the same time: the to-be-verified interface of the application A, the SMS message interface of the verification SMS message, and the operation interface of the application B that is being operated by the user. In this way, no interference is imposed on a new application (the application B) that is being operated by the user while SMS message verification is performed.

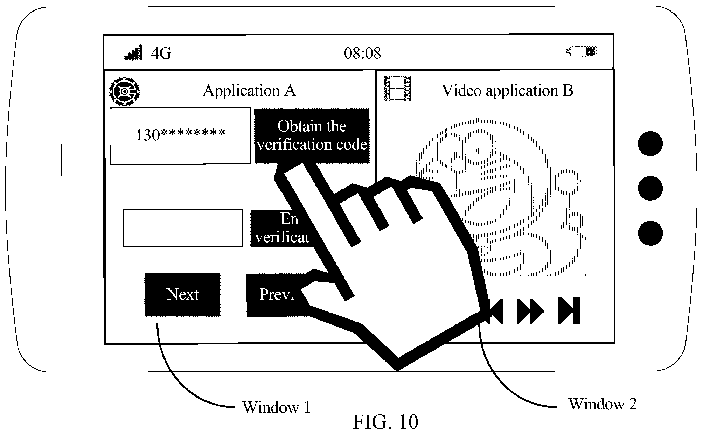

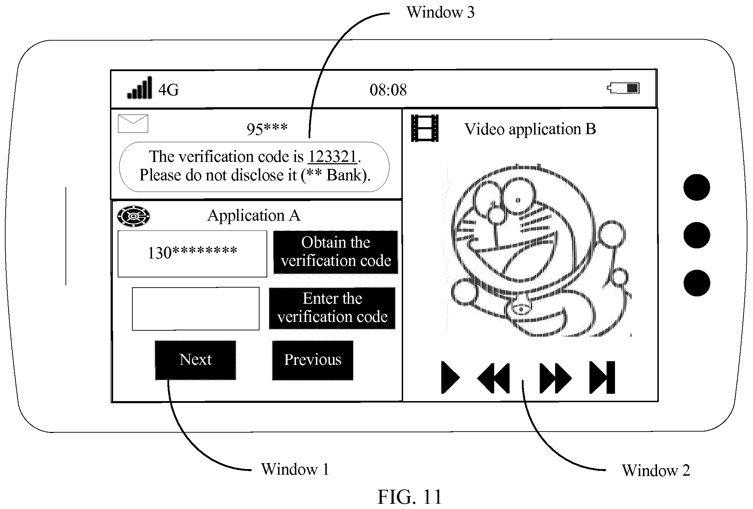

In another possible implementation, the user may trigger the SMS message verification operation in the multi-window display mode. As shown in FIG. 10, the display interface of the electronic device includes the window 1 of the application A and the window 2 of the application B (for example, a video application), and the user performs the SMS message verification operation in the application A. Therefore, after determining that the to-be-verified application associated with the received verification SMS message is the application A, as shown in FIG. 11, the electronic device may create a window 3 for the SMS message interface of the verification SMS message, and present the to-be-verified interface of the application A displayed on the window 1, the operation interface of the application B on the window 2, and the SMS message interface of the verification SMS message on the window 3 to the user at the same time by adjusting sizes of the window 1, the window 2, and the window 3. A person skilled in the art may set, based on an actual application scenario or experience, a location of the window 3 displaying the verification SMS message. This is not limited in this embodiment of the present invention.

Certainly, the windows may be displayed on the display interface in a partially overlapping manner. This is not limited in this embodiment of the present invention.

In conclusion, regardless of which possible implementation is used, before achieving the effect of this step, in other words, before displaying the verification SMS message and the to-be-verified application (for example, the application A) on the display interface at the same time, the electronic device needs to determine that the to-be-verified application runs in the foreground. For example, the to-be-verified application is always running in the foreground, or in response to triggering performed by the user, the electronic device has invoked the application to run in the foreground.

104. The electronic device detects whether a user performs a single operation on the verification code, where the single operation is used to instruct the electronic device to input the verification code into a preset location of the to-be-verified application.

105. When the user performs the single operation on the verification code, the electronic device inputs the verification code in the verification SMS message into the preset location of the to-be-verified application.

Specifically, the electronic device may preset a specific form of the single operation, for example, a slide operation, a drag operation, a single tap operation, or a double tap operation. When the user performs the single operation on the verification code in the verification SMS message on the SMS message interface of the verification SMS message, the electronic device may input the verification code in the verification SMS message into the preset location of the to-be-verified application in response to the single operation, to implement a process of automatically inputting the verification code. The preset location may be a verification input box of the to-be-verified interface.

After the electronic device separately displays the to-be-verified application and the verification SMS message by using different windows (step 103), the electronic device may further record location information, on the touchscreen, of the window on which the to-be-verified application is located in this case, for example, a coordinate range of the window on which the to-be-verified application is located, and location information, on the touchscreen, of the window on which the verification SMS message is located, for example, a coordinate range of the window on which the verification SMS message is located.

Therefore, when the single operation is the slide operation or the drag operation, if a coordinate point corresponding to a start location of the single operation falls within the coordinate range of the window on which the verification SMS message is located, it indicates that the start location of the single operation is on the window on which the verification SMS message is located, and when a coordinate point corresponding to an end location of the single operation falls within the coordinate range of the window on which the to-be-verified application is located, it indicates that the end location of the single operation is on the window on which the to-be-verified application is located.

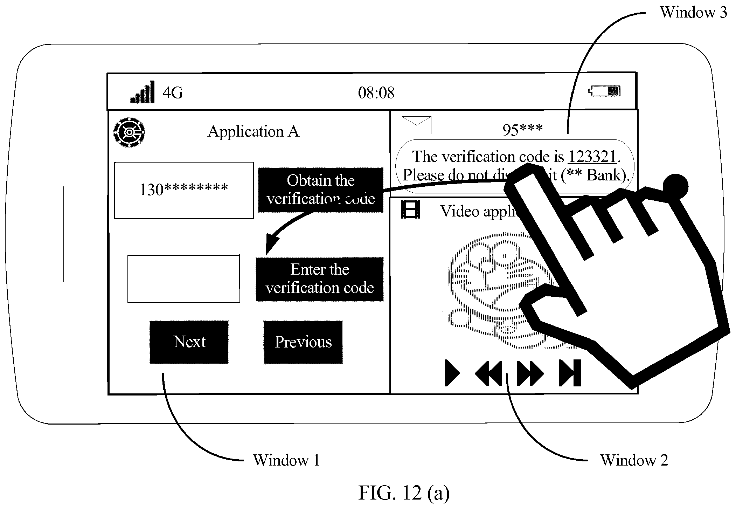

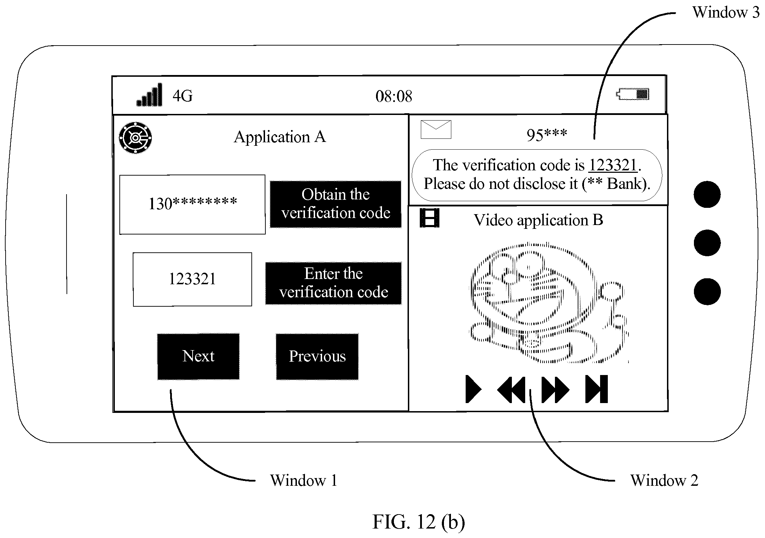

For example, still as shown in FIG. 11, the electronic device displays, respectively by using three windows at the same time, the to-be-verified interface (the window 1) of the application A, the SMS message interface (the window 3) of the verification SMS message, and the operation interface (the window 2) of the application B that is being operated by the user. In this case, the electronic device may prompt, in a form of a text, an animation, or the like, the user to perform the drag operation (namely, the single operation) on the verification code on the window 3. Therefore, if detecting that the user performs the drag operation on the verification code, as shown in FIG. 12 (a), the electronic device may further determine a start location and an end location of the drag operation. If the start location of the drag operation is on the window 3, and the end location of the drag operation is on the window 1, as shown in FIG. 12 (b), the electronic device may input the verification code in the verification SMS message into the verification input box on the window 1.

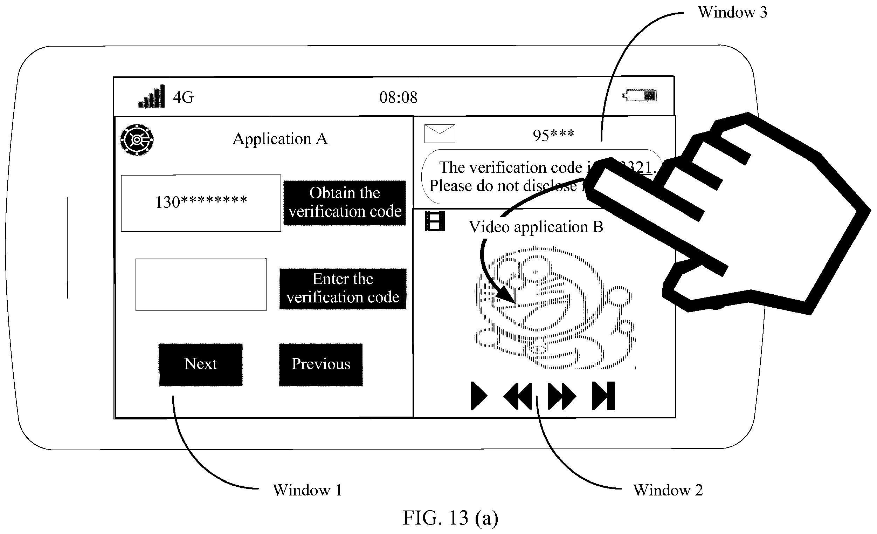

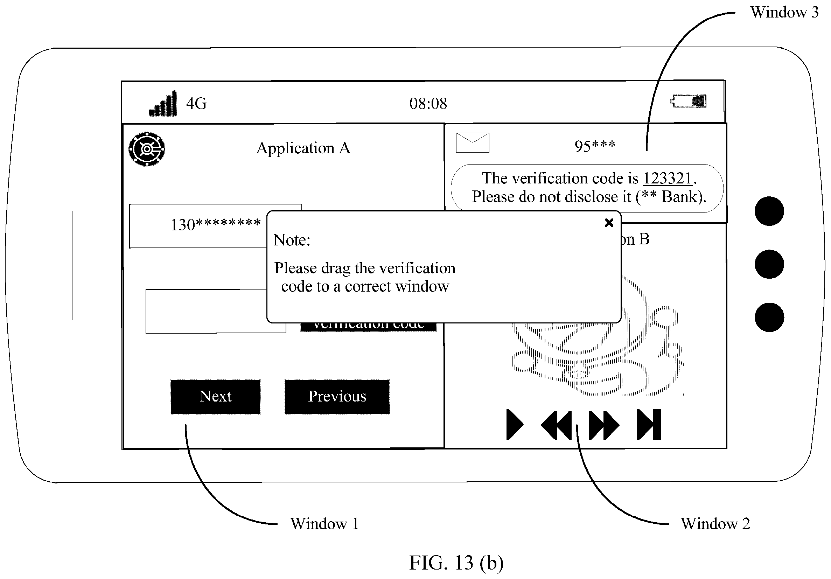

Correspondingly, if the start location of the drag operation is not on the window 2, and/or the end location of the drag operation is not on the window 1, as shown in FIG. 13 (a), the user drags the verification code on the window 3 to the window 2. Therefore, when the electronic device determines that the end location of the drag operation is not on the window 1, as shown in FIG. 13 (b), the electronic device may present a prompt (for example, a first prompt) on the display interface, to prompt the user that a drag location of the drag operation is incorrect, and may further prompt a correct drag location to the user, so that the user re-performs a correct single operation based on the prompt. The prompt may be a popup window, or may be in a form of voice, provided that an operation error and/or a correct location can be prompted to the user.

Certainly, only an example in which the verification code is dragged to the window 2 is used in FIG. 13 (a) and FIG. 13 (b). It can be understood that when the start location or the end location of the drag operation does not meet a preset condition of the single operation, a drag location error of the drag operation may be prompted to the user. This is not limited in this embodiment of the present invention.

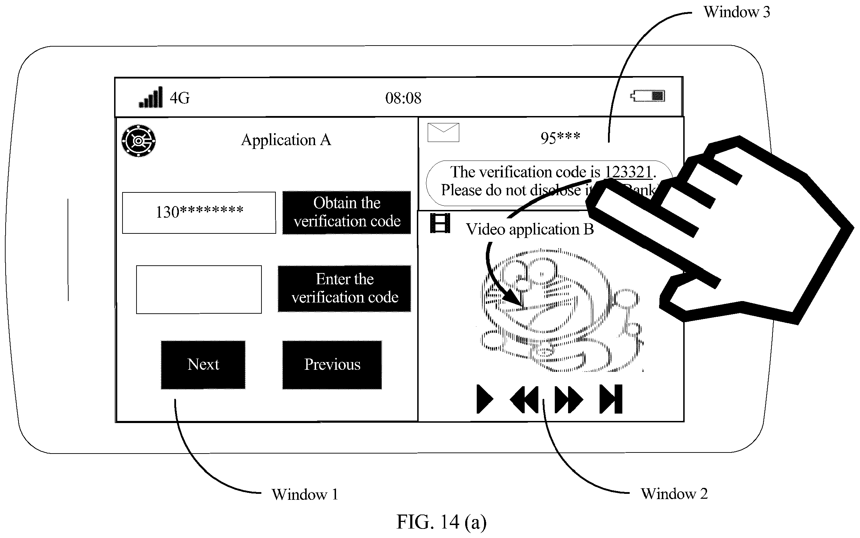

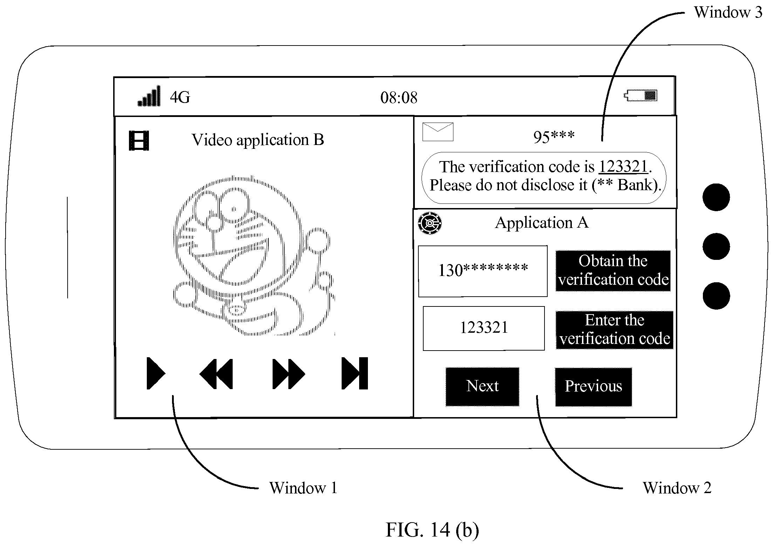

Alternatively, as shown in FIG. 14 (a), when the user drags the verification code on the window 3 to the window 2, because the to-be-verified application does not run on the window 2, as shown in FIG. 14 (b), the electronic device may directly exchange locations of the application A and the application B. In this case, the window 1 displays the operation interface of the application B, and the window 2 displays the to-be-verified interface of the application A (the to-be-verified application). In this way, the start location of the drag operation is on the SMS message interface of the verification SMS message, and the end location of the drag operation is on the to-be-verified interface of the to-be-verified application. Therefore, as shown in FIG. 14 (b), the electronic device may input the verification code in the verification SMS message into the preset location of the to-be-verified application.

That the electronic device exchanges the locations of the application A and the application B may be directly exchanging a location of the window on which the application A is located and a location of the window on which the application B is located, or may be disabling the application B on the window 2 and invoking the application A to the foreground of the window 2, and disabling the application A on the window 1 and invoking the application B to the foreground of the window 1. This is not limited in this embodiment of the present invention.

It should be noted that the user may be prompted to perform the drag operation on the verification code on the window 2 only when the user uses the verification code input method for the first time, or the user may be prompted, in a form of a text, an animation, or the like, to perform the drag operation on the verification code on the window 2 each time the verification code input method is performed. This is not limited in this embodiment of the present invention.

Certainly, only an example in which the drag operation is used as the single operation is used above for description. It can be understood that the single operation may be any preset operation. By using a single tap operation as an example, as shown in FIG. 11, after the electronic device detects that the user performs one single tap operation on the window 1, the electronic device may be triggered to input the verification code in the verification SMS message on the window 3 into the verification input box on the window 1.

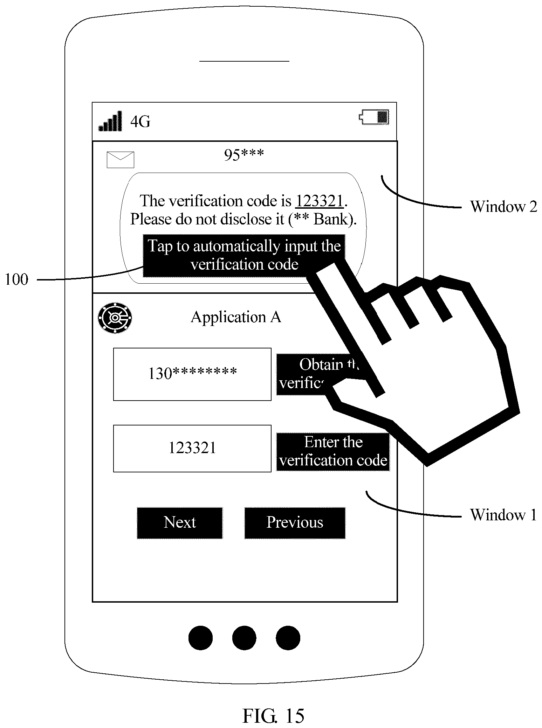

Alternatively, as shown by a key 100 in FIG. 15, the electronic device may set a function key on the SMS message interface of the verification SMS message. In this case, the single operation may be a tap operation performed on the key 100. Therefore, when detecting that the user taps the key 100, the electronic device may input the verification code in the verification SMS message on the window 2 into the verification input box on the window 1.

In a possible method design, the electronic device may further determine, based on a current application scenario, whether the electronic device needs to enter the multi-window display mode. When the electronic device needs to enter the multi-window display mode, for example, when there is a new message or notification, the electronic device may be automatically triggered to enter the multi-window display mode. In this case, an original target application and a newly added split-screen application may be presented to the user at the same time.

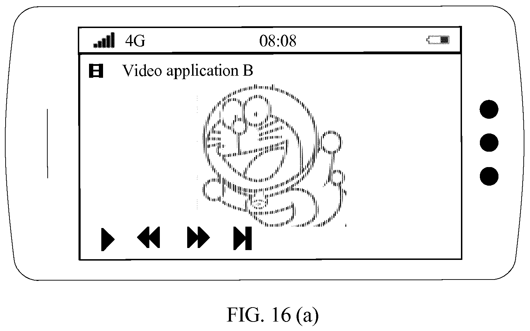

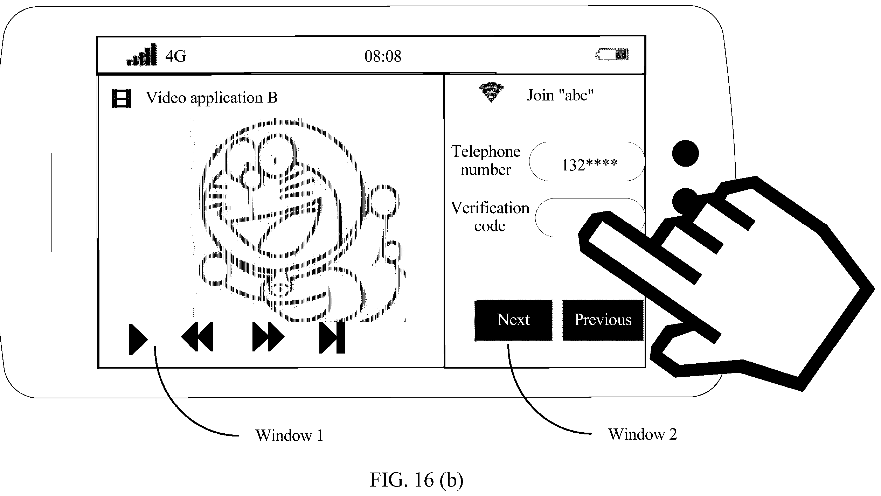

As shown in FIG. 16 (a), when the user is watching a video application by using cellular data, if the electronic device detects a relatively strong Wi-Fi signal, to prevent the target application (namely, the video application) that is running on the electronic device from being interrupted, the electronic device may automatically enter the multi-window display mode. As shown in FIG. 16 (b), the electronic device may continue to run the original target application B by using the window 1, and display a login interface of the detected Wi-Fi by using the window 2.

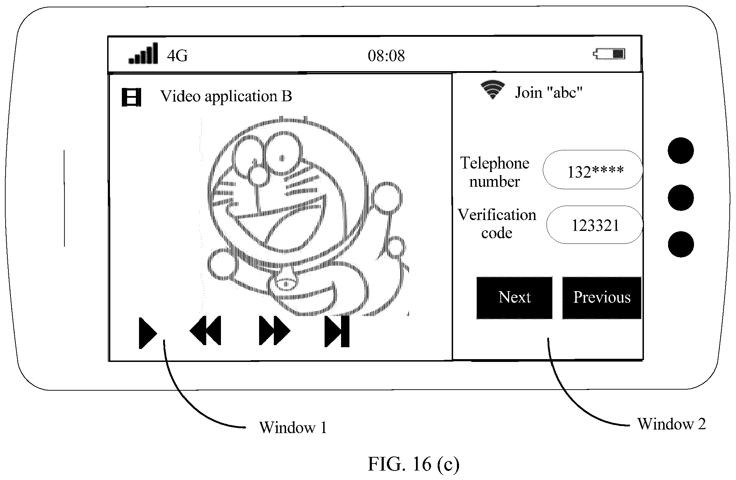

Further, the user may enter a telephone number on the login interface of the Wi-Fi, to trigger the electronic device to obtain the verification code. Subsequently, the electronic device receives the verification SMS message that includes the verification code. In this case, as shown in FIG. 16 (b), the electronic device may automatically extract the verification code in the verification SMS message. When the electronic device detects that the user taps the verification input box, as shown in FIG. 16 (c), in response to the tap operation, the electronic device may directly input the obtained verification code into the verification input box, to automatically implement a verification code input process, and no interference is imposed on a process of the target application that is originally used by the user.

The foregoing embodiment is described only by using a Wi-Fi scenario as an example. It can be understood that when the electronic device executes the target application, if the electronic device needs to enter the multi-window display mode, for example, receives a new SMS message, the electronic device may be automatically triggered to enter the multi-window display mode. This is not limited in this embodiment of the present invention.

Optionally, time validity of the single operation may be further set. For example, timing may start when the electronic device receives the verification SMS message, or timing may start when the electronic device starts the multi-window display mode. If the electronic device detects the single operation within preset duration such as five seconds after the timing starts, the electronic device inputs the verification code in the verification SMS message into the preset location of the to-be-verified application, or if the electronic device does not detect the single operation within preset duration such as five seconds after the timing starts, it is considered that a current SMS verification operation fails. In this way, a security threat in the SMS message verification process that is caused by the fact that the user does not operate the electronic device for a long time can be avoided.

Further, the electronic device may input the verification code in the verification SMS message into the preset location of the to-be-verified application in a plurality of implementations.

For example, after the electronic device obtains the verification SMS message that includes the verification code (step 101), the electronic device may store the verification code, for example, into a target clipboard dedicatedly used to store a verification code. In this way, when detecting that the user performs the single operation, the electronic device may read the stored verification code from the target clipboard, and input the verification code into the verification input box.

Alternatively, after detecting that the user performs the single operation, the electronic device may extract the verification code from the verification SMS message through semantic analysis or character string analysis, and input the verification code into the verification input box. This is not limited in this embodiment of the present invention.

Optionally, after the electronic device inputs the verification code in the verification SMS message into the preset location of the to-be-verified application, the electronic device may close the window (for example, the window 2 in FIG. 15) created for the verification SMS message, and return to a display mode of the electronic device before the electronic device enters the multi-window display mode, so as to prevent, to a greatest extent, the SMS message verification process from affecting an operation that is currently performed by the user. In addition, because the electronic device closes the window created for the verification SMS message after inputting the verification code, in the entire verification code input process, the user can view the verification code in the verification SMS message. Therefore, compared with a prior-art method of temporarily displaying a verification SMS message by using a floating window, according to the verification code input method provided in this embodiment of the present invention, the user does not need to concern about a case in which the floating window exits from the display interface before the user memorizes or copies a to-be-input verification code in time, so that the verification code input process is more convenient and efficient.

In addition, in the verification code input method provided in this embodiment of the present invention, each single operation triggered by the user may be used as one process of granting permission to obtain a verification code from a current SMS message. In other words, when the single operation triggered by the user is detected, it is equivalent to that permission from the user is obtained. In other words, the user grants permission to the to-be-verified application to obtain a verification code in a currently received verification SMS message. In this way, there is no need to pre-grant permission to the to-be-verified application to read all SMS message content of the user, so as to reduce a risk of user privacy disclosure.

Optionally, the electronic device may delete the stored verification code after detecting that the verification code has been input into the preset location of the to-be-verified application or that the window created for the verification SMS message has been closed. The user may manually close the window created for the verification SMS message, or the electronic device may automatically close the window created for the verification SMS message (for example, the electronic device automatically closes the window on which the verification code is located after determining that the verification code has been input into the preset location of the to-be-transmitted application).

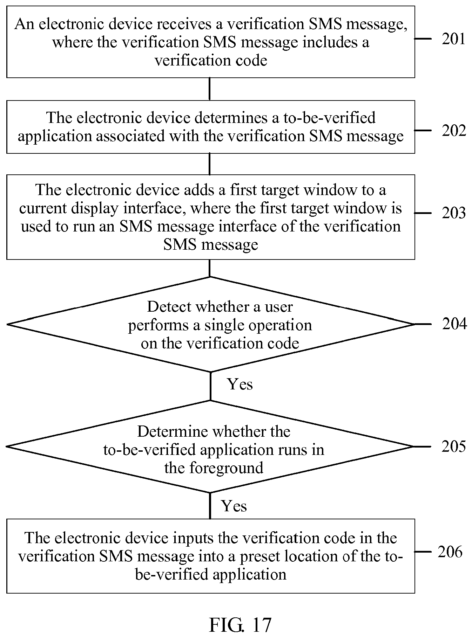

In a possible implementation, an embodiment of the present invention provides a verification code input method. As shown in FIG. 17, the method includes the following steps.

201. An electronic device receives a verification SMS message, where the verification SMS message includes a verification code.

202. The electronic device determines a to-be-verified application associated with the verification SMS message.

A method for obtaining, by the electronic device, the verification SMS message, and determining the to-be-verified application associated with the verification SMS message is similar to steps 101 and 102. Details are not described herein again.

203. The electronic device adds a first target window to a current display interface, where the first target window is used to run an SMS message interface of the verification SMS message.

Specifically, different from step 103, in step 203, after the electronic device determines the to-be-verified application (for example, an application A), regardless of whether the application A runs in the foreground (to be specific, the application A may be running in the background, or has been installed but does not run), the electronic device may create an extra window, namely, the first target window for the verification SMS message on the current display interface, and run the SMS message interface of the verification SMS message on the first target window.

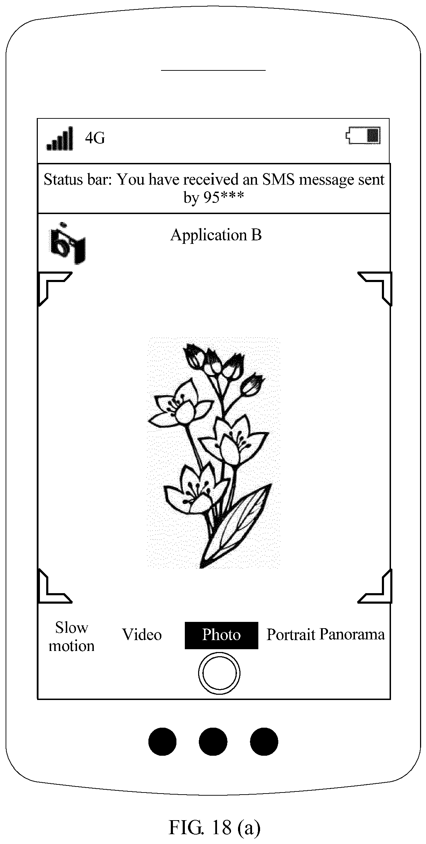

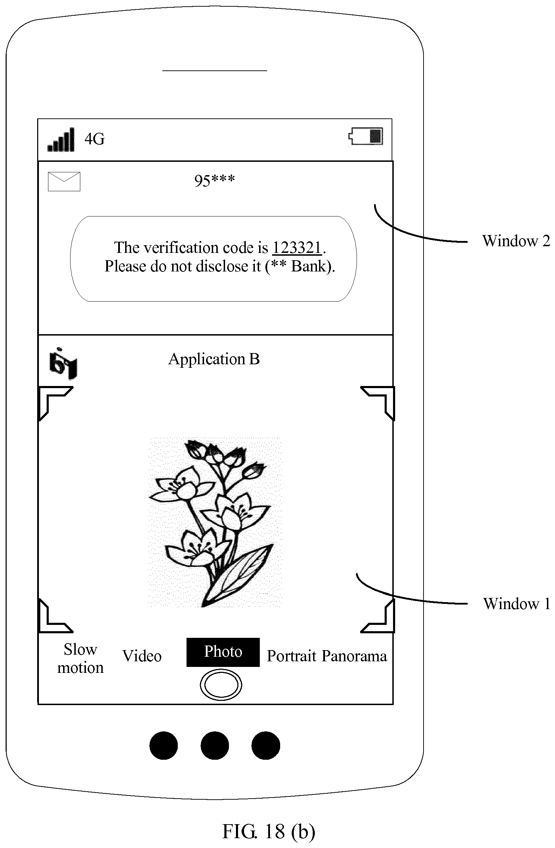

For example, as shown in FIG. 18 (a), when receiving the verification SMS message, the user has switched from the application A to an operation interface of an application B. In this case, after determining that the to-be-verified application associated with the verification SMS message is the application A, the electronic device may create the first target window used to run the SMS message interface of the verification SMS message, and reserve the operation interface of the currently running application B. For example, as shown in FIG. 18 (b), the operation interface of the application B may be displayed on a window 1 and the SMS message interface of the verification SMS message may be displayed on a window 2 in a multi-window display mode. In this case, the window 2 is the first target window.

Certainly, the electronic device may adjust sizes and locations of the window 1 and the window 2, and this is not limited in this embodiment of the present invention.

204. The electronic device detects whether a user performs a single operation on the verification code, where the single operation is used to instruct the electronic device to input the verification code into a preset location of the to-be-verified application.

205. When the user performs the single operation on the verification code, the electronic device determines whether the to-be-verified application runs in the foreground.

After the electronic device adds the first target window to the current display interface, similar to step 104, the electronic device detects whether the user performs the single operation on the verification code. For a specific implementation of the single operation and a specific method of detecting whether the user performs the single operation on the verification code, refer to the related description in step 104. Details are not described herein again.

Different from step 104, after detecting that the user performs the single operation on the verification code, in step 205, the electronic device needs to further determine whether the to-be-verified application currently runs in the foreground.

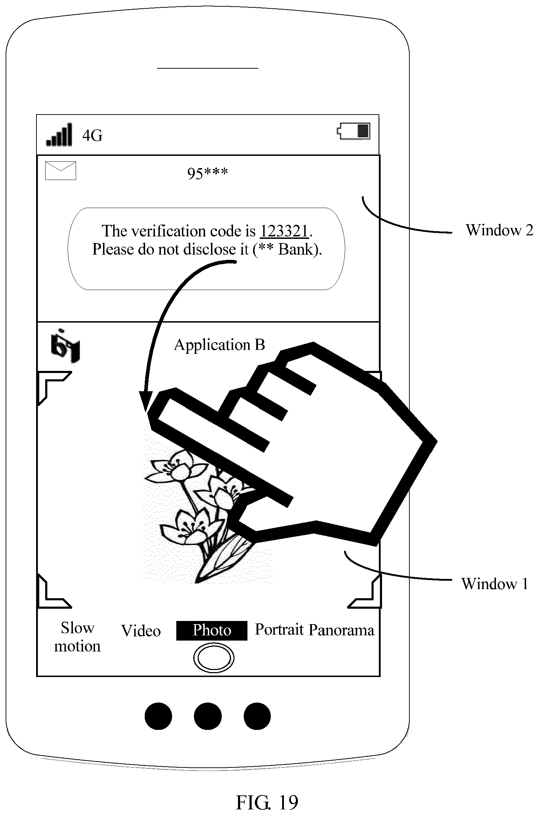

For example, as shown in FIG. 19, an example in which a drag operation is used as the single operation is used. When a start location of the drag operation is on the window 2 (namely, the first target window), and an end location of the drag operation is on the window 1, the electronic device may further determine whether the to-be-verified application runs on a second target window (namely, the window 1) on which the end location is located. When the to-be-verified application does not run on the window 1, the electronic device may determine that the to-be-verified application does not run in the foreground. Correspondingly, when the to-be-verified application runs on the window 1, the electronic device may determine that the to-be-verified application runs in the foreground.

Alternatively, a function key may be set on the SMS message interface of the verification SMS message on the window 2. In this case, the single operation may be a single tap operation or a double tap operation performed on the function key. Therefore, once detecting that the user performs the single tap operation or the double tap operation on the function key, the electronic device may further determine whether an application running on a window other than the window 2 is the to-be-verified application. When the to-be-verified application runs on any window other than the window 2, the electronic device may determine that the to-be-verified application runs in the foreground.

When a related interface such as an activity (activity) representing an application in the Android system of a to-be-verified application is currently displayed on a window, the electronic device may determine that the to-be-verified application on the window is running in the foreground.

206. When the to-be-verified application runs in the foreground, the electronic device inputs the verification code in the verification SMS message into the preset location of the to-be-verified application.

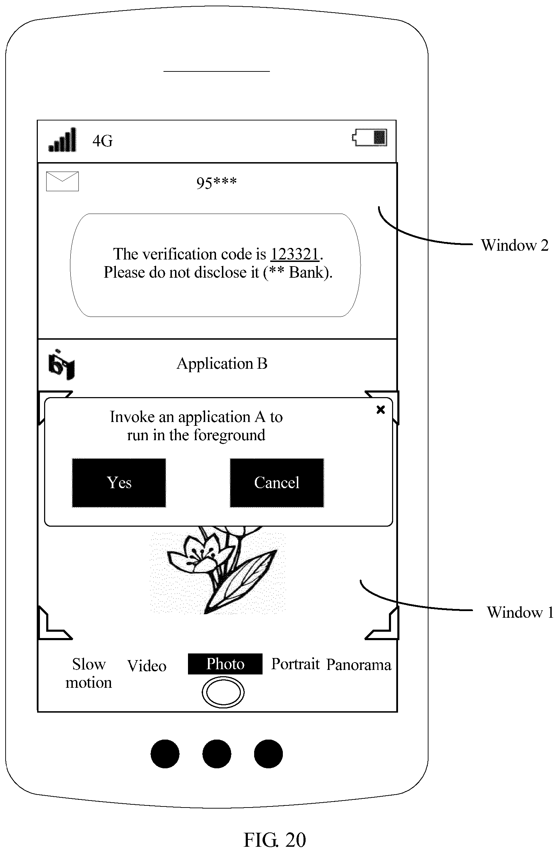

Still by using FIG. 19 as an example, when an application running on a window (for example, the second target window) on which the end location of the drag operation is located is not the to-be-verified application, as shown in FIG. 20, an application running on the window 1 is the application B rather than the to-be-verified application A. Therefore, the electronic device may present a prompt (for example, a second prompt) on the display interface in a form of a text, an animation, or the like, to prompt the user whether to invoke the to-be-verified application A to run in the foreground.

Therefore, if the user determines to invoke the to-be-verified application A to run in the foreground, the electronic device may disable the application B originally running on the window 1, and invoke the application A to run on the window 1. In this case, an interface shown in FIG. 7 is presented, and the application A (the to-be-verified application) runs on the window 1 (namely, the second target window), in other words, the to-be-verified application runs in the foreground. Therefore, as described in step 206, the electronic device may input the verification code in the verification SMS message into the preset location of the to-be-verified application, for example, a verification input box of the application A in FIG. 7. That the electronic device disables the application B originally running on the window 1 may be switching the application B to running in the background, or may be directly closing a process of the application B.

Certainly, the electronic device may alternatively not prompt the user whether to invoke the to-be-verified application A to run in the foreground, but directly disables the application B and invokes the application A to run on the window 1. This is not limited in this embodiment of the present invention.

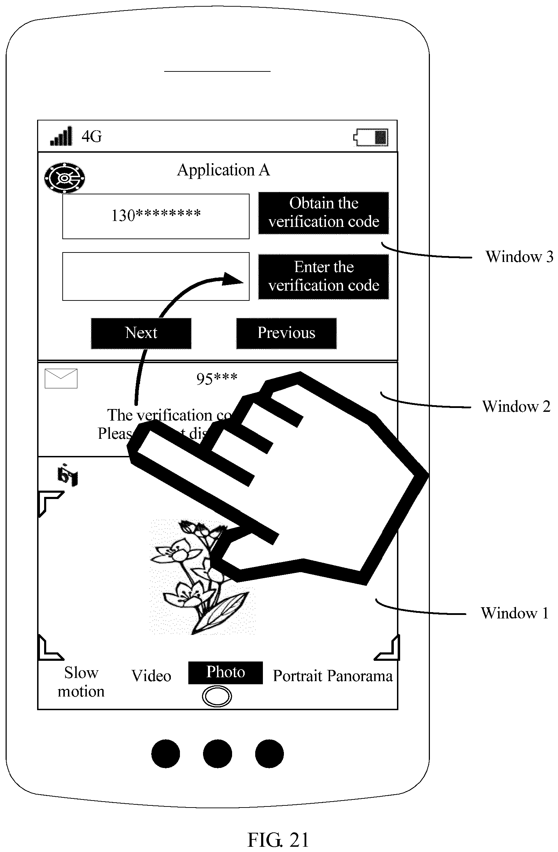

Alternatively, when an application running on the second target window is not the to-be-verified application, if the user determines to invoke the to-be-verified application A to run in the foreground, the electronic device may reserve the application B that is running on the window 1, and create an extra window such as a window 3 shown in FIG. 21, to invoke the application A to run on the window 3. Certainly, the electronic device may invoke the to-be-verified application A to run in the foreground without being acknowledged by the user. This is not limited in this embodiment of the present invention.

However, different from the foregoing operation, the user needs to re-trigger a single operation. In this case, still as shown in FIG. 21, when the electronic device detects that an end location of the single operation re-triggered by the user is on the window 3 (in this case, the second target window is the window 3), similar to step 105, the electronic device may input the verification code in the verification SMS message into the preset location of the to-be-verified application.

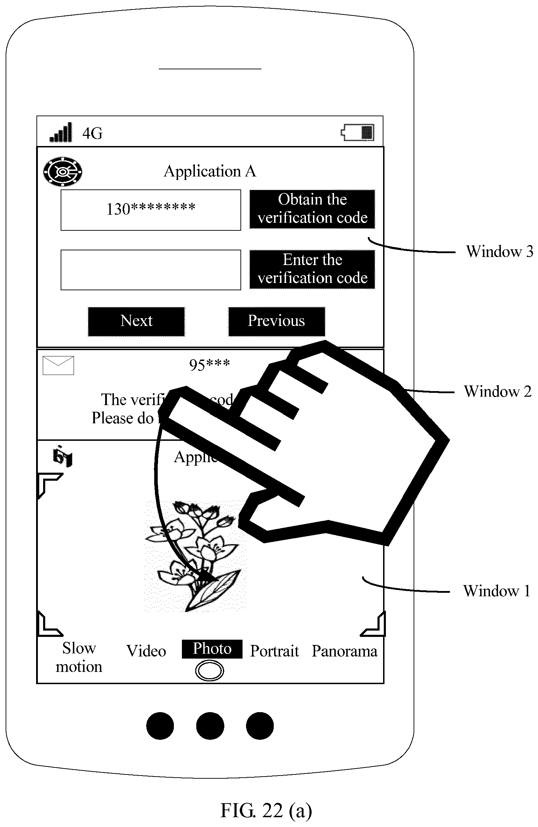

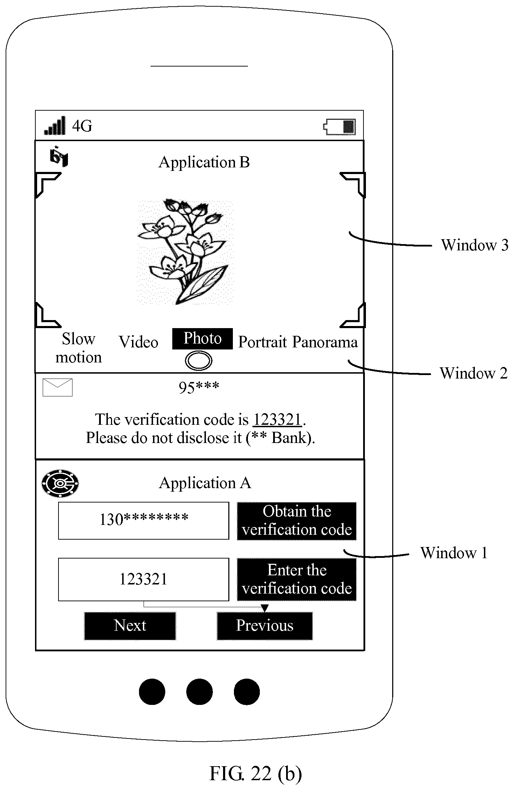

Alternatively, in step 203, when the electronic device adds the first target window to the display interface, the electronic device has started the multi-window display mode. For example, as shown in FIG. 22 (a), when the electronic device adds the first target window to the display interface to display the verification SMS message, the display interface includes the window 1, the window 2, and the window 3. The window 1 displays the operation interface of the application B, the window 2 displays a verification interface of the verification SMS message, and the window 3 displays the to-be-verified interface of the application A (the to-be-verified application). Therefore, as shown in FIG. 22 (a), when the user drags the verification code to the window 1, because the to-be-verified application does not run on the window 1, as shown in FIG. 22 (b), the electronic device may directly exchange locations of the application A and the application B. In this case, the window 1 displays the to-be-verified interface of the application A (the to-be-verified application), and the window 2 displays the operation interface of the application B. Further, the electronic device inputs the verification code in the verification SMS message into the preset location of the to-be-verified application.

That the electronic device exchanges the locations of the application A and the application B may be directly exchanging a location of the window on which the application A is located and a location of the window on which the application B is located, or may be disabling the application B on the window 1 and invoking the application A to the foreground of the window 1, and disabling the application A on the window 2 and invoking the application B to the foreground of the window 2. This is not limited in this embodiment of the present invention.

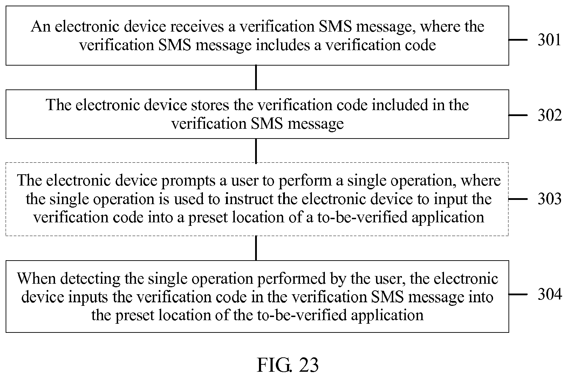

In a possible implementation, an embodiment of the present invention provides a verification code input method. As shown in FIG. 23, the method includes the following steps.

301. An electronic device receives a verification SMS message, where the verification SMS message includes a verification code.

302. The electronic device stores the verification code included in the verification SMS message.

For a specific method of obtaining, by the electronic device, the verification SMS message in step 301, refer to the related description of step 101. Details are not described herein again.

In step 302, because the verification code usually includes several digits and/or characters, the electronic device may extract, from the verification SMS message based on the feature, the verification code included in the verification SMS message, to store the verification code.

Certainly, a person skilled in the art may set, based on an actual need or an actual scenario, a specific manner of extracting the verification code from the verification SMS message. This is not limited in this embodiment of the present invention.

Specifically, a part of storage space of the electronic device may be obtained through division and used as target storage space such as a dedicated clipboard dedicatedly used to store a verification code. In this way, the electronic device may store the extracted verification code into the target storage space, and default storage space (for example, a default clipboard) used when the electronic device performs a copy operation still stores copied content obtained when a user performs a copy operation most recently. Therefore, when subsequently performing a paste operation (for example, a common operation of performing a touch and hold operation and then tapping a paste option in the prior art), the electronic device still may obtain, from the default clipboard, the copied content obtained when the copy operation is performed most recently.

It should be noted that the dedicated clipboard and the default clipboard may be divided logically. To be specific, the verification code is stored logically, and the copied content stored when the user performs a copy operation most recently is not covered. For example, a global buffer (buffer) may be set. After identifying the verification code in the verification SMS message, the electronic device may extract the verification code, store the verification code into the global buffer, and ensure that the verification code does not cover the copied content stored when the user performs a copy operation most recently. Certainly, the two pieces of storage space may alternatively be divided physically, and the verification code and the copied content obtained when the user performs a copy operation most recently are separately stored into different storage space obtained through division. This is not limited in this embodiment of the present invention.

303. (Optionally) The electronic device prompts a user to perform a single operation, where the single operation is used to instruct the electronic device to input the verification code into a preset location of a to-be-verified application.

In other words, before performing step 303, the electronic device may pre-associate a verification code input operation with the single operation, or it can be understood as follows: The electronic device pre-establishes a correspondence between an operation of inputting the verification code into the preset location of the to-be-verified application and an action of performing the single operation by the user. Therefore, once it is detected that the user performs the single operation, the electronic device is triggered to input the stored verification code into the preset location of the to-be-verified application, for example, a verification input box of the to-be-verified application.

By using an example in which the verification code is stored in the global buffer, after storing the verification code, the electronic device may associate the single operation with the operation of obtaining the verification code from the global buffer and inputting the verification code into the preset location of the to-be-verified application.

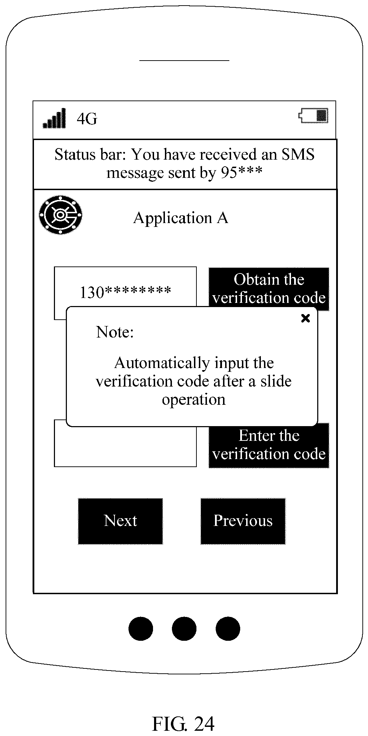

Therefore, in step 303, after storing the verification code in step 302, as shown in FIG. 24, the electronic device may prompt, in a form of a text, an animation, or the like, the user to perform the single operation to completely input the verification code.

The single operation may be a particular operation predefined by the user or the electronic device, for example, a double tap operation or a slide operation. In this case, the single operation is uniquely associated with the verification code input operation. Alternatively, the single operation may be a paste operation, for example, an operation of directly pasting copied content by performing a touch and hold operation. In this case, the single operation is associated with both the verification code input operation and the operation of inputting content most recently copied by the user. This is not limited in this embodiment of the present invention.

Alternatively, some constraint conditions may be set for the single operation. For example, a double tap operation performed on the verification input box is the single operation, or a double tap operation performed within 30 seconds after the verification SMS message is received is the single operation. This is not limited in this embodiment of the present invention.

304. When detecting the single operation performed by the user, the electronic device inputs the verification code in the verification SMS message into the preset location of the to-be-verified application.

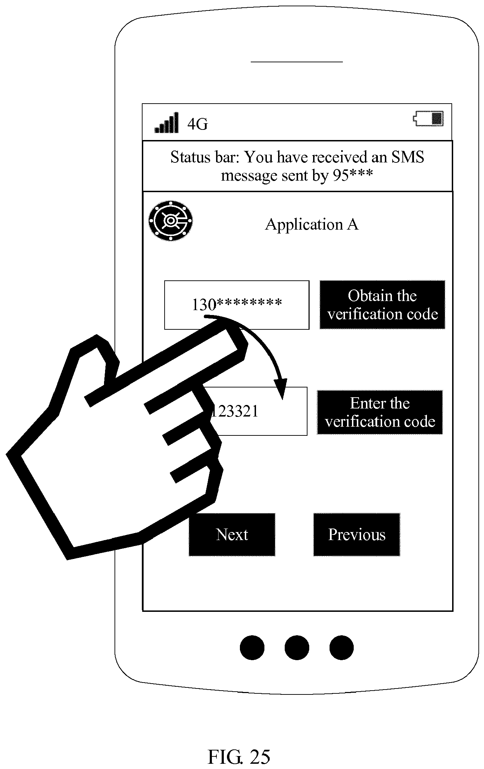

In a possible method design, the single operation may be specifically the predefined particular operation. Then, by using a slide operation as an example, after obtaining the verification SMS message, the electronic device may further determine the to-be-verified application associated with the verification SMS message, for example, the to-be-verified application is an application A. As shown in FIG. 25, when the electronic device detects that the user performs the slide operation, because the single operation is uniquely associated with the verification code input operation, the electronic device may obtain the stored verification code from the target storage space (for example, the global buffer), and input the verification code into the verification input box of the application A.

Optionally, after the electronic device detects that the user performs the slide operation, the electronic device may further first determine whether the application A runs in the foreground. When the application A runs in the foreground, the stored verification code may be obtained from the target storage space, and the verification code may be input into the verification input box of the application A in the foreground. If the application A does not run in the foreground, the electronic device may not perform the verification code input operation, or may perform the verification code input operation after prompting the user to invoke the application A to run in the foreground. This is not limited in this embodiment of the present invention.

In another possible method design, the single operation may alternatively be an operation related to both the default clipboard and the target storage space in the electronic device, for example, the paste operation. Therefore, once the electronic device detects the single operation of the user, the electronic device may determine, by using a specific application that is currently running in the foreground, whether to obtain the stored verification code from the target storage space or obtain, from the default clipboard, the content most recently copied by the user. Optionally, a priority of obtaining the verification code from the target storage space may be higher than a priority of obtaining, from the default clipboard, the content most recently copied by the user.

If an application currently running in the foreground is the application A (namely, the to-be-verified application), the electronic device may obtain the stored verification code from the target storage space, and paste the verification code into the verification input box of the application A. If an application currently running in the foreground is not the to-be-verified application, the electronic device may extract, from the default clipboard, the copied content obtained when the user performs a copy operation most recently, and paste the content.

Certainly, in step 302, the electronic device may store the obtained verification code into the default clipboard, and in this case, the stored verification code covers the copied content obtained when the user performs a copy operation most recently. This is not limited in this embodiment of the present invention.

In addition, the verification code input method provided in steps 301 to 304 may be combined with the verification code input method provided in steps 101 to 105 (or steps 201 to 206). This is not limited in this embodiment of the present invention. For example, in step 103, as shown in FIG. 8, if the user has switched from a to-be-verified interface of the application A (the to-be-verified application) to an operation interface of an application B, and if the user taps a cancel button in this case, in other words, cancels the multi-window display mode, the electronic device may be triggered to perform steps 302 to 304. For example, the electronic device may store the verification code in the verification SMS message into the target storage space, and prompt the user that the user may subsequently obtain the verification code from the target storage space by using a corresponding single operation. In this way, after the user subsequently performs the corresponding single operation in step 303, the electronic device may be triggered to obtain the verification code from the target storage space, and input the verification code into the preset location of the to-be-verified application, to complete an SMS message verification operation.

In conclusion, it can be learned from steps 101 to 105, steps 201 to 206, and steps 301 to 304 that in the verification code input method provided in this embodiment of the present invention, the user only needs to perform a particular operation (namely, the single operation) after receiving the verification SMS message, so that the electronic device can automatically input the verification code in the verification SMS message into the verification input box of the to-be-verified application without a need to grant permission to an application to read SMS message content, thereby ensuring accuracy and security of verification code input, and improving efficiency of successfully performing an SMS message verification operation.

It can be understood that to implement the foregoing functions, the electronic device includes a corresponding hardware structure and/or software module for performing each of the functions. A person of ordinary skill in the art should be easily aware that the units and algorithm steps in the examples described with reference to the embodiments disclosed in this specification may be implemented by hardware or a combination of hardware and computer software in the embodiments of the present invention. Whether the functions are performed by hardware or computer software driving hardware depends on particular applications and design constraint conditions of the technical solutions. A person skilled in the art may use different methods to implement the described functions for each particular application, but it should not be considered that the implementation goes beyond the scope of the embodiments of the present invention.

In the embodiments of the present invention, function modules of the electronic device may be divided based on the foregoing method example. For example, each function module may be divided according to each function, or two or more functions may be integrated into one processing module. The integrated module may be implemented in a form of hardware, or may be implemented in a form of a software function module. It should be noted that the module division in the embodiments of the present invention is an example, and is merely logical function division. There may be another division manner in an actual implementation.

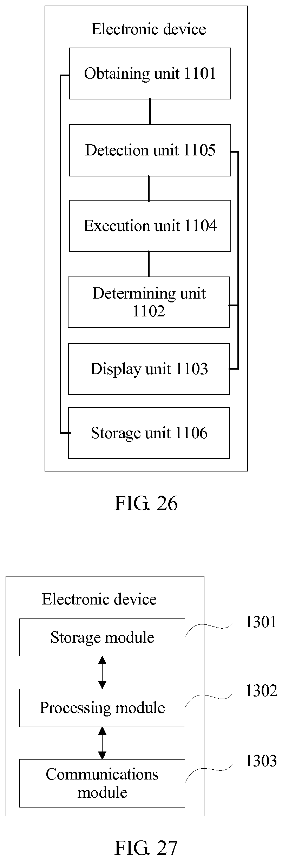

When corresponding function modules are divided corresponding to functions, FIG. 26 is a possible schematic structural diagram of an electronic device in the foregoing embodiments. The electronic device includes an obtaining unit 1101, a determining unit 1102, a display unit 1103, an execution unit 1104, a detection unit 1105, and a storage unit 1106.

The obtaining unit 1101 is configured to support the electronic device in performing the process 101 in FIG. 5, the process 201 in FIG. 17, and the process 301 in FIG. 23. The determining unit 1102 is configured to support the electronic device in performing the process 102 in FIG. 5, and the processes 202 and 205 in FIG. 17. The display unit 1103 is configured to support the electronic device in performing the process 103 in FIG. 5, the process 203 in FIG. 17, and the process 303 in FIG. 23. The execution unit 1104 is configured to support the electronic device in performing the process 105 in FIG. 5, the process 206 in FIG. 17, and the process 304 in FIG. 23. The detection unit 1105 is configured to support the electronic device in performing the process 104 in FIG. 5 and the process 204 in FIG. 17. The storage unit 1106 is configured to support the electronic device in performing the process 302 in FIG. 23. All related content of each step in the foregoing method embodiments may be cited in function descriptions of a corresponding function module. Details are not described herein again.

When an integrated unit is used, FIG. 27 is a possible schematic structural diagram of an electronic device in the foregoing embodiments. The electronic device includes a processing module 1302 and a communications module 1303. The processing module 1302 is configured to control and manage an action of the electronic device. The communications module 1303 is configured to support UE in communicating with another network entity. The electronic device may further include a storage module 1301, configured to store program code and data of the electronic device.

The processing module 1302 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module may implement or execute various example logical blocks, modules, and circuits that are described with reference to the content disclosed in the present invention. The processor may also be a combination of computing functions, for example, a combination of one or more microprocessors or a combination of a DSP and a microprocessor. The communications module 1303 may be a transceiver, a transceiver circuit, a communications interface, or the like. The storage module 1301 may be a memory.

When the processing module 1302 is a processor, the communications module 1303 is an RF transceiver circuit, and the storage module 1301 is a memory, the electronic device provided in this embodiment of the present invention may be the electronic device shown in FIG. 4.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedures or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk, (SSD)), or the like.

The foregoing descriptions are merely specific embodiments of this application, but are not intended to limit the protection scope of this application. Therefore, the protection scope of this application shall be subject to the protection scope of the claims.

## Claims

1. A verification code input method, comprising:
Receiving (101), by an electronic device, a verification SMS message, wherein the verification SMS message comprises a verification code;
Detecting (104), by the electronic device, a single operation performed on a touchscreen, wherein the single operation is used to instruct the electronic device to input the verification code into a preset location of a to-be-verified application, and the to-be-verified application performs authentication on a user identity by using the verification code; and
Inputting (105), by the electronic device, the verification code into the preset location in response to the single operation;
wherein after the receiving, by an electronic device, a verification SMS message, the method further comprises:
when the to-be-verified application runs in the foreground, displaying, by the electronic device, the verification SMS message and the to-be-verified application at the same time on a display interface by using different windows; and
the inputting, by the electronic device, the verification code into the preset location in response to the single operation comprises:
obtaining, by the electronic device, an end location of the single operation on the display interface; and
when the end location is on the window on which the to-be-verified application is displayed, inputting, by the electronic device, the verification code into the preset location;
wherein after the obtaining, by the electronic device, an end location of the single operation on the display interface, the method further comprises:
when the end location is not on the window on which the to-be-verified application is displayed, presenting, by the electronic device, a first prompt on the display interface, wherein the first prompt is used to instruct a user to perform a correct single operation on the verification code.

2. The method according to claim 1, wherein after the receiving, by an electronic device, a verification SMS message, the method further comprises:
adding, by the electronic device, a first target window to a display interface, wherein the first target window is used to display the verification SMS message.

3. The method according to claim 2, wherein the inputting, by the electronic device, the verification code into the preset location in response to the single operation comprises:
in response to the single operation, determining, by the electronic device, whether the to-be-verified application runs in the foreground; and
when the to-be-verified application runs in the foreground, inputting, by the electronic device, the verification code into the preset location; or
when the to-be-verified application does not run in the foreground, invoking, by the electronic device, the to-be-verified application to run in the foreground, and inputting the verification code into the preset location.

4. The method according to claim 3, wherein the determining, by the electronic device, whether the to-be-verified application runs in the foreground comprises:
determining, by the electronic device, whether the to-be-verified application runs on a second target window, wherein the second target window is a window on which an end location of the single operation is located; and
if the to-be-verified application runs on the second target window, determining, by the electronic device, that the to-be-verified application runs in the foreground; or
if the to-be-verified application does not run on the second target window, determining, by the electronic device, that the to-be-verified application does not run in the foreground.

5. The method according to claim 3 or 4, wherein when the to-be-verified application does not run in the foreground, the method further comprises:
presenting, by the electronic device, a second prompt on a display interface, wherein the second prompt is used to instruct a user to invoke the to-be-verified application to run in the foreground.

6. The method according to any one of claims 1 to 5, wherein after the receiving, by an electronic device, a verification SMS message, the method further comprises:
storing, by the electronic device, the verification code in the verification SMS message into target storage space, wherein the target storage space is different from storage space in which a clipboard of the electronic device is located.

7. The method according to claim 6, wherein the single operation is uniquely associated with a verification code input operation; and
the inputting, by the electronic device, the verification code into the preset location in response to the single operation comprises:
in response to the single operation, inputting, by the electronic device, the verification code stored in the target storage space into the preset location.

8. The method according to claim 6, wherein the inputting, by the electronic device, the verification code into the preset location in response to the single operation comprises:
in response to the single operation, determining, by the electronic device, whether the to-be-verified application runs in the foreground; and
when the to-be-verified application runs in the foreground, inputting, by the electronic device, the verification code stored in the target storage space into the preset location.

9. The method according to claim 8, wherein after the determining, by the electronic device, whether the to-be-verified application runs in the foreground, the method further comprises:
when the to-be-verified application does not run in the foreground, pasting, by the electronic device, into the verification input box of the to-be-verified application, content that is most recently copied by the user in the clipboard.

10. The method according to any one of claims 1 to 9, wherein before the detecting, by the electronic device, a single operation performed on a touchscreen, the method further comprises:
prompting, by the electronic device on the display interface, the user to perform the single operation.

11. An electronic device, comprising:
an obtaining unit (1101), configured to receive a verification SMS message, wherein the verification SMS message comprises a verification code;
a detection unit (1105), configured to detect a single operation performed on a touchscreen, wherein the single operation is used to instruct the electronic device to input the verification code into a preset location of a to-be-verified application, and the to-be-verified application performs authentication on a user identity by using the verification code; and
an execution unit (1104), configured to input the verification code into the preset location in response to the single operation;
a display unit (1103), configured to display the verification SMS message and the to-be-verified application at the same time on a display interface by using different windows, when the to-be-verified application runs in the foreground;
the execution unit, further configured to obtain an end location of the single operation on the display interface and input the verification code into the preset location when the end location is on the window on which the to-be-verified application is displayed; and
the display unit, further configured to present a first prompt on the display interface, when the end location is not on the window on which the to-be-verified application is displayed, wherein the first prompt is used to instruct a user to perform a correct single operation on the verification code.

12. An electronic device, comprising a processor, a memory, a bus, and a communications interface, wherein
the memory is configured to store a computer execution instruction, the processor is connected to the memory by using the bus, and when the electronic device runs, the processor executes the computer execution instruction stored in the memory, so that the electronic device performs the verification code input method according to any one of claims 1 to 10.

13. A computer readable storage medium, wherein the computer readable storage medium stores an instruction, and when the instruction is run on an electronic device, the electronic device performs the verification code input method according to any one of claims 1 to 10.

14. A computer program product comprising an instruction, wherein when the computer program product is run on an electronic device, the electronic device performs the verification code input method according to any one of claims 1 to 10.

## Patentansprüche

1. Verifizierungscodeeingabeverfahren, umfassend:
ein Empfangen (101), durch eine elektronische Vorrichtung, einer Verifizierungs-SMS-Mitteilung, wobei die Verifizierungs-SMS-Mitteilung einen Verifizierungscode umfasst;
ein Erfassen (104), durch die elektronische Vorrichtung, eines einzelnen Vorgangs, der auf einem Touchscreen ausgeführt wird, wobei der einzelne Vorgang verwendet wird, um die elektronische Vorrichtung anzuweisen, den Verifizierungscode in einen voreingestellten Standort einer zu verifizierenden Anwendung einzugeben, und die zu verifizierende Anwendung führt eine Authentifizierung für eine Benutzeridentität unter Verwendung des Verifizierungscodes durch; und
ein Eingeben (105), durch die elektronische Vorrichtung, des Verifizierungscodes in den voreingestellten Standort als Reaktion auf den einzelnen Vorgang;
wobei nach dem Empfangen, durch eine elektronische Vorrichtung, einer Verifizierungs-SMS-Mitteilung das Verfahren ferner Folgendes umfasst:
wenn die zu verifizierende Anwendung im Vordergrund ausgeführt wird, Anzeigen, durch die elektronische Vorrichtung, der Verifizierungs-SMS-Mitteilung und der zu verifizierenden Anwendung gleichzeitig auf einer Anzeigeschnittstelle unter Verwendung unterschiedlicher Fenster; und
das Eingeben, durch die elektronische Vorrichtung, des Verifizierungscodes in den voreingestellten Standort als Reaktion auf den einzelnen Vorgang Folgendes umfasst:
ein Erhalten, durch die elektronische Vorrichtung, eines Endstandorts des einzelnen Vorgangs auf der Anzeigeschnittstelle; und
wenn sich der Endstandort in dem Fenster befindet, in dem die zu verifizierende Anwendung angezeigt ist, das Eingeben, durch die elektronische Vorrichtung, des Verifizierungscodes in den voreingestellten Standort;
wobei nach dem Erhalten, durch die elektronische Vorrichtung, eines Endstandorts des einzelnen Vorgangs auf der Anzeigeschnittstelle das Verfahren ferner Folgendes umfasst: wenn sich der Endstandort nicht in dem Fenster befindet, in dem die zu verifizierende Anwendung angezeigt ist, ein Darstellen, durch die elektronische Vorrichtung, einer ersten Eingabeaufforderung auf der Anzeigeschnittstelle, wobei die erste Eingabeaufforderung verwendet wird, um einen Benutzer anzuweisen, einen korrekten einzelnen Vorgang am Verifizierungscode durchzuführen.

2. Verfahren nach Anspruch 1, wobei nach dem Empfangen, durch eine elektronische Vorrichtung, einer Verifizierungs-SMS-Mitteilung das Verfahren ferner Folgendes umfasst:
ein Hinzufügen, durch die elektronische Vorrichtung, eines ersten Zielfensters zu einer Anzeigeschnittstelle, wobei das erste Zielfenster verwendet wird, um die Verifizierungs-SMS-Mitteilung anzuzeigen.

3. Verfahren nach Anspruch 2, wobei das Eingeben, durch die elektronische Vorrichtung, des Verifizierungscodes in den voreingestellten Standort als Reaktion auf den einzelnen Vorgang Folgendes umfasst:
als Reaktion auf den einzelnen Vorgang, das Bestimmen, durch die elektronische Vorrichtung, ob die zu verifizierende Anwendung im Vordergrund läuft; und
wenn die zu verifizierende Anwendung im Vordergrund läuft, das Eingeben durch die elektronische Vorrichtung, des Verifizierungscodes in den voreingestellten Standort; oder wenn die zu verifizierende Anwendung nicht im Vordergrund ausgeführt wird, ein Aufrufen, durch die elektronische Vorrichtung, der zu verifizierende Anwendung, um im Vordergrund zu laufen, und das Eingeben des Verifizierungscodes in den voreingestellten Standort.

4. Verfahren nach Anspruch 3, wobei das Bestimmen, durch die elektronische Vorrichtung, ob die zu verifizierende Anwendung im Vordergrund läuft, Folgendes umfasst:
das Bestimmen, durch die elektronische Vorrichtung, ob die zu verifizierende Anwendung in einem zweiten Zielfenster ausgeführt wird, wobei das zweite Zielfenster ein Fenster ist, in dem sich ein Endstandort des einzelnen Vorgangs befindet; und
wenn die zu verifizierende Anwendung im zweiten Zielfenster ausgeführt wird, das Bestimmen, durch die elektronische Vorrichtung, dass die zu verifizierende Anwendung im Vordergrund läuft; oder
wenn die zu verifizierende Anwendung nicht im zweiten Zielfenster ausgeführt wird, das Bestimmen, durch die elektronische Vorrichtung, dass die zu verifizierende Anwendung nicht im Vordergrund läuft.

5. Verfahren nach Anspruch 3 oder 4, wobei, wenn die zu verifizierende Anwendung nicht im Vordergrund läuft, das Verfahren ferner Folgendes umfasst:
ein Darstellen, durch die elektronische Vorrichtung, einer zweiten Eingabeaufforderung auf einer Anzeigeschnittstelle, wobei die zweite Eingabeaufforderung verwendet wird, um einen Benutzer anzuweisen, die zu verifizierende Anwendung aufzurufen, um im Vordergrund zu laufen.

6. Verfahren nach einem der Ansprüche 1 bis 5, wobei nach dem Empfangen, durch eine elektronische Vorrichtung, einer Verifizierungs-SMS-Mitteilung das Verfahren ferner Folgendes umfasst:
ein Speichern, durch die elektronische Vorrichtung, des Verifizierungscodes in der Verifizierungs-SMS-Mitteilung an einem Zielspeicherplatz, wobei sich der Zielspeicherplatz von dem Speicherplatz unterscheidet, in dem sich eine Zwischenablage der elektronischen Vorrichtung befindet.

7. Verfahren nach Anspruch 6, wobei der einzelne Vorgang eindeutig einem Verifizierungscodeeingabevorgang zugeordnet ist; und
das Eingeben, durch die elektronische Vorrichtung, des Verifizierungscodes in den voreingestellten Standort als Antwort auf den einzelnen Vorgang Folgendes umfasst:
als Reaktion auf den einzelnen Vorgang, das Eingeben, durch die elektronische Vorrichtung, des im Zielspeicherplatz gespeicherten Verifizierungscodes in den voreingestellten Standort.

8. Verfahren nach Anspruch 6, wobei das Eingeben, durch die elektronische Vorrichtung, des Verifizierungscodes in den voreingestellten Standort als Reaktion auf den einzelnen Vorgang Folgendes umfasst:
als Reaktion auf den einzelnen Vorgang, das Bestimmen, durch die elektronische Vorrichtung, ob die zu verifizierende Anwendung im Vordergrund läuft; und
wenn die zu verifizierende Anwendung im Vordergrund läuft, das Eingeben, durch die elektronische Vorrichtung, des in dem Zielspeicherplatz gespeicherten Verifizierungscodes in den voreingestellten Standort.

9. Verfahren nach Anspruch 8, wobei nach dem Bestimmen, durch die elektronische Vorrichtung, ob die zu verifizierende Anwendung im Vordergrund läuft, das Verfahren ferner Folgendes umfasst:
wenn die zu überprüfende Anwendung nicht im Vordergrund läuft, ein Einfügen, durch die elektronische Vorrichtung, in das Überprüfungseingabefeld der zu überprüfenden Anwendung des Inhalts, der zuletzt vom Benutzer in die Zwischenablage kopiert wurde.

10. Verfahren nach einem der Ansprüche 1 bis 9, wobei vor dem Erfassen, durch die elektronische Vorrichtung, eines einzelnen Vorgangs, der auf einem Touchscreen ausgeführt wird, das Verfahren ferner Folgendes umfasst:
ein Auffordern, durch die elektronische Vorrichtung auf der Anzeigeschnittstelle, des Benutzers, den einzelnen Vorgang auszuführen.

11. Elektronische Vorrichtung, umfassend:
eine erhaltende Einheit (1101), die dazu konfiguriert ist, eine Verifizierungs-SMS-Mitteilung zu empfangen, wobei die Verifizierungs-SMS-Mitteilung einen Verifizierungscode umfasst; eine Erfassungseinheit (1105), die dazu konfiguriert ist, einen einzelnen Vorgang zu erfassen, der auf einem Touchscreen ausgeführt wird, wobei der einzelne Vorgang verwendet wird, um die elektronische Vorrichtung anzuweisen, den Verifizierungscode in einen voreingestellten Standort einer zu verifizierenden Anwendung einzugeben, und die zu verifizierende Anwendung eine Authentifizierung für eine Benutzeridentität unter Verwendung des Verifizierungscodes durchführt; und
eine Ausführungseinheit (1104), die dazu konfiguriert ist, den Verifizierungscode als Reaktion auf den einzelnen Vorgang in den voreingestellten Standort einzugeben;
eine Anzeigeeinheit (1103), die dazu konfiguriert ist, die Verifizierungs-SMS-Mitteilung und die zu verifizierende Anwendung gleichzeitig auf einer Anzeigeschnittstelle unter Verwendung unterschiedlicher Fenster anzuzeigen, wenn die zu verifizierende Anwendung im Vordergrund läuft;
die Ausführungseinheit, die ferner dazu konfiguriert ist, einen Endstandort des einzelnen Vorgangs auf der Anzeigeschnittstelle zu erhalten und den Verifizierungscode in den voreingestellten Standort einzugeben, wenn sich der Endstandort in dem Fenster befindet, in dem die zu verifizierende Anwendung angezeigt ist; und
die Anzeigeeinheit, die ferner dazu konfiguriert ist, eine erste Eingabeaufforderung auf der Anzeigeschnittstelle darzustellen, wenn sich der Endstandort nicht in dem Fenster befindet, in dem die zu überprüfende Anwendung angezeigt wird, wobei die erste Eingabeaufforderung verwendet wird, um einen Benutzer anzuweisen, einen korrekten einzelnen Vorgang an dem Verifizierungscode auszuführen.

12. Elektronische Vorrichtung, umfassend einen Prozessor, einen Speicher, einen Bus und eine Kommunikationsschnittstelle, wobei
der Speicher dazu konfiguriert ist, eine Computerausführungsanweisung zu speichern, der Prozessor unter Verwendung des Busses mit dem Speicher verbunden ist, und wenn die elektronische Vorrichtung läuft, der Prozessor die im Speicher gespeicherte Computerausführungsanweisung ausführt, sodass die elektronische Vorrichtung das Verifizierungscodeeingabeverfahren nach einem der Ansprüche 1 bis 10 durchführt.

13. Computerlesbares Speichermedium, wobei das computerlesbare Speichermedium einen Befehl speichert, und wenn der Befehl auf einer elektronischen Vorrichtung läuft, die elektronische Vorrichtung das Verifizierungscodeeingabeverfahren gemäß einem der Ansprüche 1 bis 10 durchführt.

14. Computerprogrammprodukt, umfassend eine Anweisung, wobei, wenn das Computerprogrammprodukt auf einer elektronischen Vorrichtung ausgeführt wird, die elektronische Vorrichtung das Verifizierungscodeeingabeverfahren gemäß einem der Ansprüche 1 bis 10 ausführt.

## Revendications

1. Procédé d'entrée de code de vérification, comprenant :
la réception (101), par un dispositif électronique, d'un message SMS de vérification, dans lequel le message SMS de vérification comprend un code de vérification ;
la détection (104), par le dispositif électronique, d'une opération unique effectuée sur un écran tactile, dans lequel l'opération unique sert à demander au dispositif électronique d'entrer le code de vérification dans un emplacement prédéfini d'une application à vérifier, et l'application à vérifier effectue une authentification sur une identité d'utilisateur en utilisant le code de vérification ; et
l'entrée (105), par le dispositif électronique, du code de vérification dans l'emplacement prédéfini en réponse à l'opération unique ;
dans lequel après la réception, par un dispositif électronique, d'un message SMS de vérification, le procédé comprend en outre : lorsque l'application à vérifier s'exécute au premier plan, l'affichage, par le dispositif électronique, du message SMS de vérification et de l'application à vérifier en même temps sur une interface d'affichage en utilisant des fenêtres différentes ; et
l'entrée, par le dispositif électronique, du code de vérification dans l'emplacement prédéfini en réponse à l'opération unique comprend :
l'obtention, par le dispositif électronique, d'un emplacement final de l'opération unique sur l'interface d'affichage ; et lorsque l'emplacement final est sur la fenêtre sur laquelle l'application à vérifier est affichée, l'entrée, par le dispositif électronique, du code de vérification dans l'emplacement prédéfini ;
dans lequel après l'obtention, par le dispositif électronique, d'un emplacement final de l'opération unique sur l'interface d'affichage, le procédé comprend en outre :
lorsque l'emplacement final n'est pas sur la fenêtre sur laquelle l'application à vérifier est affichée, la présentation, par le dispositif électronique, d'une première invite sur l'interface d'affichage, dans lequel la première invite sert à demander à un utilisateur d'effectuer une opération unique correcte sur le code de vérification.

2. Procédé selon la revendication 1, dans lequel après la réception, par un dispositif électronique, d'un message SMS de vérification, le procédé comprend en outre :
l'ajout, par le dispositif électronique, d'une première fenêtre cible à une interface d'affichage, dans lequel la première fenêtre cible sert à afficher le message SMS de vérification.

3. Procédé selon la revendication 2, dans lequel l'entrée, par le dispositif électronique, du code de vérification dans l'emplacement prédéfini en réponse à l'opération unique comprend :
en réponse à l'opération unique, la détermination, par le dispositif électronique, de la question de savoir si l'application à vérifier s'exécute au premier plan ; et
lorsque l'application à vérifier s'exécute au premier plan, l'entrée, par le dispositif électronique, du code de vérification dans l'emplacement prédéfini ; ou
lorsque l'application à vérifier ne s'exécute pas au premier plan, l'invocation, par le dispositif électronique, de l'application à vérifier pour qu'elle s'exécute au premier plan, et l'entrée du code de vérification dans l'emplacement prédéfini.

4. Procédé selon la revendication 3, dans lequel la détermination, par le dispositif électronique, de la question de savoir si l'application à vérifier s'exécute au premier plan, comprend :
la détermination, par le dispositif électronique, de la question de savoir si l'application à vérifier s'exécute sur une seconde fenêtre cible, dans lequel la seconde fenêtre cible est une fenêtre sur laquelle un emplacement final de l'opération unique est situé ; et
si l'application à vérifier s'exécute sur la seconde fenêtre cible, la détermination, par le dispositif électronique, que l'application à vérifier s'exécute au premier plan ; ou
si l'application à vérifier ne s'exécute pas sur la seconde fenêtre cible, la détermination, par le dispositif électronique, que l'application à vérifier ne s'exécute pas au premier plan.

5. Procédé selon la revendication 3 ou 4, dans lequel lorsque l'application à vérifier ne s'exécute pas au premier plan, le procédé comprend en outre :
la présentation, par le dispositif électronique, d'une seconde invite sur une interface d'affichage, dans lequel la seconde invite sert à demander à un utilisateur d'invoquer l'application à vérifier pour qu'elle s'exécute au premier plan.

6. Procédé selon l'une quelconque des revendications 1 à 5, dans lequel après la réception, par un dispositif électronique, d'un message SMS de vérification, le procédé comprend en outre : le stockage, par le dispositif électronique, du code de vérification dans le message SMS de vérification dans un espace de stockage cible, dans lequel l'espace de stockage cible est différent de l'espace de stockage dans lequel se trouve un presse-papiers du dispositif électronique.

7. Procédé selon la revendication 6, dans lequel l'opération unique est associée de manière unique à une opération d'entrée de code de vérification ; et
l'entrée, par le dispositif électronique, du code de vérification dans l'emplacement prédéfini en réponse à l'opération unique comprend :
en réponse à l'opération unique, l'entrée, par le dispositif électronique, du code de vérification stocké dans l'espace de stockage cible dans l'emplacement prédéfini.

8. Procédé selon la revendication 6, dans lequel l'entrée, par le dispositif électronique, du code de vérification dans l'emplacement prédéfini en réponse à l'opération unique comprend :
en réponse à l'opération unique, la détermination, par le dispositif électronique, de la question de savoir si l'application à vérifier s'exécute au premier plan ; et
lorsque l'application à vérifier s'exécute au premier plan, l'entrée, par le dispositif électronique, du code de vérification stocké dans l'espace de stockage cible dans l'emplacement prédéfini.

9. Procédé selon la revendication 8, dans lequel après la détermination, par le dispositif électronique, de la question de savoir si l'application à vérifier s'exécute au premier plan, le procédé comprend en outre :
lorsque l'application à vérifier ne s'exécute pas au premier plan, le collage, par le dispositif électronique, dans la zone d'entrée de vérification de l'application à vérifier, du contenu qui a été copié en dernier par l'utilisateur dans le presse-papiers.

10. Procédé selon l'une quelconque des revendications 1 à 9, dans lequel avant la détection, par le dispositif électronique, d'une opération unique effectuée sur un écran tactile, le procédé comprend en outre :
l'invitation, par le dispositif électronique sur l'interface d'affichage, de l'utilisateur à effectuer l'opération unique.

11. Dispositif électronique, comprenant :
une unité d'obtention (1101), conçue pour recevoir un message SMS de vérification, dans lequel le message SMS de vérification comprend un code de vérification ;
une unité de détection (1105) conçue pour détecter une opération unique effectuée sur un écran tactile, dans lequel l'opération unique sert à demander au dispositif électronique d'entrer le code de vérification dans un emplacement prédéfini d'une application à vérifier, et l'application à vérifier effectue une authentification sur une identité d'utilisateur en utilisant le code de vérification ; et
une unité d'exécution (1104), conçue pour entrer le code de vérification dans l'emplacement prédéfini en réponse à l'opération unique ;
une unité d'affichage (1103), configurée pour afficher le message SMS de vérification et l'application à vérifier en même temps sur une interface d'affichage en utilisant des fenêtres différentes, lorsque l'application à vérifier s'exécute au premier plan ;
l'unité d'exécution étant conçue en outre pour obtenir un emplacement final de l'opération unique sur l'interface d'affichage et entrer le code de vérification dans l'emplacement prédéfini lorsque l'emplacement final est sur la fenêtre sur laquelle l'application à vérifier est affichée ; et
l'unité d'affichage étant en outre conçue pour présenter une première invite sur l'interface d'affichage, lorsque l'emplacement final n'est pas sur la fenêtre sur laquelle l'application à vérifier est affichée, dans lequel la première invite sert à demander à un utilisateur d'effectuer une opération unique correcte sur le code de vérification.

12. Dispositif électronique, comprenant un processeur, une mémoire, un bus et une interface de communication, dans lequel la mémoire est conçue pour stocker une instruction d'exécution informatique, le processeur est connecté à la mémoire en utilisant le bus, et lorsque le dispositif électronique fonctionne, le processeur exécute l'instruction d'exécution informatique stockée dans la mémoire, de sorte que le dispositif électronique effectue le procédé d'entrée de code de vérification selon l'une quelconque des revendications 1 à 10.

13. Support de stockage lisible par ordinateur, dans lequel le support de stockage lisible par ordinateur stocke une instruction, et lorsque l'instruction est exécutée sur un dispositif électronique, le dispositif électronique exécute le procédé d'entrée de code de vérification selon l'une quelconque des revendications 1 à 10.

14. Produit programme informatique comprenant une instruction, dans lequel lorsque le produit programme informatique est exécuté sur un dispositif électronique, le dispositif électronique exécute le procédé d'entrée de code de vérification selon l'une quelconque des revendications 1 à 10.
